# EUROPÄISCHE PATENTSCHRIFT

(11) **EP 2 303 597 B1**
(45) Veröffentlichungstag und Bekanntmachung des Hinweises auf die Patenterteilung: **19.09.2012**
(21) Anmeldenummer: 09777265.1
(22) Anmeldetag: 14.07.2009
(51) Int. Cl.: B42D 15/00, G07D 7/12, G02B 6/10, B42D 15/10

(54) **WERT- ODER SICHERHEITSDOKUMENT MIT EINER LICHTLEITSTRUKTUR UND LOKALEN LICHTAUSTRITTSSTELLEN AN EINER OBERSEITE SOWIE VERFAHREN ZU DESSEN HERSTELLUNG**
VALUABLE OR SECURITY DOCUMENT COMPRISING A LIGHT-GUIDING STRUCTURE AND LOCAL LIGHT EXIT LOCATIONS AT A TOP SIDE, AND METHOD FOR PRODUCING SAID DOCUMENT
DOCUMENT DE VALEUR OU DE SÉCURITÉ COMPRENANT UNE STRUCTURE DE GUIDAGE DE LUMIÈRE ET DES POINTS LOCAUX DE SORTIE DE LUMIÈRE SUR UNE FACE SUPÉRIEURE ET PROCÉDÉ DE FABRICATION DE CE DOCUMENT

(30) Priorität: 14.07.2008 DE 102008033716
(43) Veröffentlichungstag der Anmeldung: 06.04.2011
(73) Patentinhaber: Bundesdruckerei GmbH, 10969 Berlin (DE)
(72) Erfinder: PFLUGHOEFFT, Malte, 13347 Berlin (DE); KUNATH, Christian, 12203 Berlin (DE); HOPPE, Andreas, 12683 Berlin (DE)
(74) Vertreter: Obst, Bernhard
(86) Internationale Anmeldenummer: PCT/EP2009/005209
(87) Internationale Veröffentlichungsnummer: WO 2010/006806

(56) Entgegenhaltungen:
- EP-A- 0 384 274
- DE-A1-102005 052 326
- JP-A- 2004 077 858
- JP-A- 2004 151 182
- JP-A- 2007 203 568
- JP-A- 2007 261 114
- US-A1- 2004 229 022

## Beschreibung

Die Erfindung betrifft ein Wert- oder Sicherheitsdokument, umfassend einen Dokumentenkörper mit einer Oberseite, wobei in dem Dokumentenkörper eine Lichtleitstruktur zum Leiten von Licht über Totalreflexionen an Grenzschichten der Lichtleitstruktur ausgebildet ist, wobei das Leiten von Licht in einer Ebene, die im Wesentlichen parallel zu der Oberseite verläuft, ausführbar ist. Die Erfindung betrifft ferner ein Verfahren zum Herstellen eines solchen Wert- und/oder Sicherheitsdokuments mit einer Lichtleitstruktur parallel zu einer Oberseite des Dokumentenkörpers des Wert- oder Sicherheitsdokuments.

### Technisches Gebiet der Erfindung

Wert- und/oder Sicherheitsdokumente weisen Sicherheitsmerkmale auf, die ein Nachahmen, Fälschen oder Verfälschen des Sicherheits- und/oder Wertdokuments erschweren oder gar unmöglich machen sollen. Im Stand der Technik sind eine Vielzahl solcher Sicherheitsmerkmale bekannt. Ein Teil der Sicherheitsmerkmale ist dadurch charakterisiert, wie sie eine Wechselwirkung des Wert- und/oder Sicherheitsdokuments mit elektromagnetischer Strahlung, insbesondere Licht im sichtbaren Wellenlängenbereich, beeinflussen. Hierbei ist es bekannt, beispielsweise beugende Strukturen, die beispielsweise als Hologramme ausgebildet sein können, in das Wert- und/oder Sicherheitsdokument zu integrieren. Eingestrahltes Licht wird von einer solchen beugenden Struktur definiert gebeugt. Ein sich ergebendes Beugungsmuster wird mit einem erwarteten Beugungsmuster verglichen, um das Wert- und/oder Sicherheitsmerkmal bzw. das Wert- und/oder Sicherheitsdokument zu verifizieren.

Ebenso ist es bekannt, Lumineszenzstoffe, beispielsweise fluoreszierende Farben, in Sicherheitsdokumente zu integrieren, so dass bei einer Anregung einer Lumineszenz in dem Wert- und/oder Sicherheitsdokument ausgelöst werden kann.

Ferner ist es im Stand der Technik bekannt, Eigenschaften einer Lichtdurchlässigkeit als Sicherheitsmerkmale zu nutzen. Beispielsweise seien hier Durchsichtpasser erwähnt, die aus zwei zueinander korrespondierenden Strukturen bestehen, die auf unterschiedlichen Seiten einer transluzenten Schicht in dem Sicherheitsdokument angeordnet sind und sich bei einer Durchleuchtung des Dokuments zu einem Muster ergänzen.

Aus der DE 199 34 434 A1 sind Wert- und Sicherheitsdokumente bekannt, die mit Mikrokanälen versehen sind. Es ist dort vorgeschlagen, mehrere Mikrokanäle vorzugsweise unter verschiedenen Winkeln in das Wert- oder Sicherheitsdokument einzubringen. Abhängig vom Betrachtungswinkel können nur einzelne oder keine der Mikrokanäle erkannt werden. Lediglich die Mikrokanäle, deren Längsachsen mit einer Betrachtungsrichtung fluchten, sind gut zu erkennen. Hierdurch sind unter unterschiedlichen Betrachtungsrichtungen unterschiedliche durch die Mikrokanäle gebildete Muster erkennbar.

Aus der EP 1 780 041 A2 ist ein Sicherheitssubstrat bekannt, das einen Träger mit einer Vorderseite, die sich von einer ersten Kante zu einer zweiten, der ersten Kante gegenüberliegenden Kante erstreckt, und mit einer der Vorderseite gegenüberliegenden Rückseite umfasst, wobei die Vorderseite und die Rückseite zueinander so angeordnet sind, dass sie einen Lichtleiter bilden. Das Sicherheitssubstrat umfasst ferner ein lumineszierendes Etikett, das in den Träger zwischen die Vorder- und die Rückseite sowie zwischen die erste und die zweite Kante angeordnet ist, so dass durch die Lumineszenz des Sicherheitsetiketts erzeugtes Lumineszenzlicht durch den Lichtleiter zumindest zu der ersten oder der zweiten Kante geleitet wird, so dass über ein Auslesen des durch die Vorder- oder die Rückseite stimulierten Lumineszenzlichts an den Kanten eine Verifikation des Sicherheitsdokuments durchgeführt werden kann.

Ein Wert- und/oder Sicherheitsdokument, bei dem die Lichtleitereigenschaft durch die Grenzflächen des Dokumentkörpers bzw. Trägers realisiert sind, weist den Nachteil auf, dass die Lichtleitereigenschaften durch eine Verschmutzung der Oberflächen und/oder ein Aufdrucken von Informationen nachteilig beeinträchtigt werden, da die Farbmittel und/oder Schmutzteilchen Streuzentren für das in dem Dokument geleitete Licht darstellen und zu einer nicht voraussagbaren und während der Benutzung abhängig von einem Verschmutzungsgrad wechselnden Auskopplung des Lichts an der Oberfläche führen. Eine Codierung von Informationen in dem durch den Lichtleiter gebildeten Sicherheitselement, abgesehen von der Information des Vorhandenseins des Sicherheitselements, ist nicht vorgesehen. Weiter kann in einen solchen Dokumentkörper keine opake Schicht integriert sein, da diese innerhalb der Lichtleitstruktur liegen würde und somit die Lichtleitung unterbinden würde. Somit sind ausschließlich transparente Karten herstellbar.

Aus der JP 2007-203568 A ist ein kartenartiger Anzeigekörper bekannt, der eine Vielzahl von ebenen Lichtleiterkörpern umfasst, die aufeinander laminiert sind. Die Vorder- und/oder Rückseite der ebenen Lichtleiter sind jeweils mit einem reliefartigen Beugungsgitter oder einem Hologramm versehen, welches eine Abbildung darstellt, an dem in dem Lichtleiter geführtes Licht aus dem Lichtleiterkörper emittiert wird. Indem in den unterschiedlichen Lichtleitern Licht unterschiedlicher Wellenlängen geleitet wird, kann durch eine Überlagerung ein farbiges Bild erzeugt werden.

Die JP 2004-151182 A zeigt einen Gegenstand, bei dem drei transparente Schichten aufeinander laminiert sind, deren mittlere Schicht einen höheren Brechungsindex als die äußeren Schichten aufweist. An der Grenzfläche zwischen der mittleren Schicht und einer der äußeren Schichten ist ein Gitter ausgebildet, so dass in der mittleren Schicht geleitetes Licht an der reliefartigen Gitterstruktur aus der mittleren Schicht ausgekoppelt wird.

Aus der DE 10 2005 052 326 A1 sind ein Sicherheitselement und ein Verfahren zu seiner Herstellung bekannt. Die Druckschrift betrifft ein Sicherheitselement für Speicherpapiere, Wertdokumente und dergleichen, das eine offene und eine durch Beleuchtung des Sicherheitselements auslesbare versteckte Bildinformation enthält, mit einem Wiedergabebereich mit ersten Bildelementen, die die offene Bildinformation darstellen, und zweiten Bildelementen, die die versteckte Bildinformation erzeugen, einem von dem Wiedergabebereich beabstandeten Beleuchtungsbereich und einem den Wiedergabebereich und den Beleuchtungsbereich verbindenden Lichtleiter, der auf den Beleuchtungsbereich auftreffende Auslesestrahlung zum Wiedergabebereich leitet, wobei die zweiten Bildelemente so eingerichtet und ausgelegt sind, dass diese die versteckte Bildinformation nur erzeugen, wenn sie mit Licht vom Lichtleiter zum Wiedergabebereich geleiteter Auslesestrahlung beaufschlagt sind.

Die JP 2004-077858 A beschreibt einen Gegenstand mit Lichtleiterhologrammen, die zwischen zwei unterschiedlich opaken Schichten geführt sind, wobei in die Schicht mit einer höheren Transmission eine Abbildung auf jede Oberfläche aufgebracht ist, die in Kontakt mit den Lichtleitern steht.

Aus der JP 2007-261114 A sind eine laminierte Struktur und ein Verfahren zum nachträglichen Einschreiben einer Information bekannt. Ultrakurze Laserpulse, die durch eine transparente Schutzschicht hindurchtreten, werden auf eine Druckschicht fokussiert, um eine nicht sichtbare chiffrierte Information in eine einen optischen Lichtleiter bildende Schicht eines identifikationsdokuments einzubringen, bei dem nacheinander die den Lichtleiter formende Schicht, eine Druckschrift und die Schutzschicht auf ein Substrat laminiert sind. Zusätzlich werden die Position der eingebrachten Information und ein Dechiffrierschlüssel in einem in dem Sicherheitselement eingebetteten Mikrochip gespeichert.

Aus der EP 0 384 274 ist ein Verfahren zur Herstellung einer mehrschichtigen Ausweiskarte bekannt. Die Karte wird aus mehreren Folienschichten gebildet, welche mittels verschiedener Drucktechnologien bedruckt werden. Die lichtdurchlässigen Folien werden mittels eines digitalen Druckverfahrens mit vorgängig digital gespeicherten karteninhaberspezifischen Informationen bedruckt. Die Deckfolien, die Basisfolien sowie weitere Folien werden sowohl digital als auch mittels herkömmlicher Druckverfahren bedruckt. Die Karte weist ferner in der Kartenebene transparente Bereiche auf, welche vom Rand der Karte optisch abtastbar sind und optische Strukturdaten bilden, die für jede Karte charakteristisch sind.

Aus der US 2004/0229022 A1 ist eine Sicherheitsvorrichtung mit einer spiegelnden reflektiven Schicht bekannt, bei welcher Markierungen auf der reflektieren Schicht angeordnet sind. Über den Markierungen ist eine Schutzschicht angebracht. Auch auf der von den Markierungen abgewandten Seite der reflektierenden Schicht ist eine Schutzschicht aufgebracht. Die Markierungen sind mittels eines Thermotransferdruckverfahrens aufgebracht.

### Technisches Problem der Erfindung

Der Erfindung liegt das technische Problem zugrunde, ein verbessertes Wert- und/oder Sicherheitsdokument, welches eine Lichtleitstruktur als Sicherheitsmerkmal nutzt, welches eine Speicherung von Informationen auf einfache Weise zulässt, nur mit erheblichem Aufwand nachzubilden ist und einfach verifizierbar ist, sowie ein Verfahren zur Herstellung eines solchen Sicherheitsdokuments und/oder ein Verfahren zum Einbringen eines solchen Sicherheitsmerkmals in ein Wert- oder Sicherheitsdokument zu schaffen.

### Grundzüge der Erfindung

Zur Lösung des technischen Problems ist vorgesehen, ein Wert- und/oder Sicherheitsdokument mit einem Dokumentenkörper herzustellen oder zu verwenden, in dem eine Lichtleitstruktur ausgebildet ist oder wird, die für eine Lichtleitung über eine Totalreflexion an ihren Grenzschichten ausgebildet ist und eine Lichtleitung in einer Ebene ermöglicht, die im Wesentlichen parallel zu einer Oberseite des Dokumentenkörpers ist. Über lokale Modifizierungen der Grenzschicht, die eine Auskopplung von in dem Lichtleiter parallel zur Oberfläche des Dokumentenkörpers geleiteten Licht begünstigen oder herbeiführen und zu einem Austreten von Licht durch die Oberseite des Dokumentenkörpers führen, können Informationen in dem Wert- oder Sicherheitsdokument codiert werden. Mit einer Einkopplung von Licht, welches in der Lichtleitstruktur über Totalreflexion parallel zur Oberfläche des Dokumentenkörpers geleitet wird, ist eine Verifizierung des Sicherheitsmerkmals und ein Erfassen der gespeicherten Information auf einfache Weise möglich, da die lokalen Modifizierungen als Lichtaustrittstellen durch die Oberfläche des Dokumentenkörpers erkennbar sind. Über eine Ausgestaltung der lokalen Modifizierungen können alphanumerische Zeichen, Symbole, Grafiken usw. gespeichert und bei der Verifizierung abgerufen werden. Insbesondere wird ein Wert- und/oder Sicherheitsdokument umfassend einen Dokumentenkörper mit einer Oberseite vorgeschlagen, wobei in dem Dokumentenkörper eine Lichtleitstruktur zum Leiten von Licht in einer Ebene, die im Wesentlichen parallel zu der Oberseite verläuft, über Totalreflexionen an Grenzschichten der Lichtleitstruktur ausgebildet ist, wobei die Grenzschicht lokale Modifizierungen aufweist, so dass an Stellen der lokalen Modifizierungen eine Auskopplung von in der Lichtleitstruktur geleitetem Licht aus der Lichtleitstruktur begünstigt wird, was zu einer Lichtemission durch die Oberseite des Dokumentenkörpers führt. Vorzugsweise sind die lokalen Modifizierungen an einer der Oberseite des Dokumentenkörpers zugewanden Seite der Lichtleitstruktur ausgebildet. Ferner wird ein Verfahren zum Herstellen eines Wert- oder Sicherheitsdokuments geschaffen, welches einen Dokumentenkörper mit einer Oberseite umfasst, wobei in dem Dokumentenkörper eine Lichtleitstruktur zum Leiten von Licht in einer Ebene, die im Wesentlichen parallel zu der Oberseite verläuft, über Totalreflexionen an Grenzschichten der Lichtleitstruktur ausgebildet ist oder wird. Das Verfahren umfasst die Schritte: Bereitstellen und/oder Herstellendes Dokumentkörpers mit der Lichtleitstruktur, wobei in die Grenzschicht, vorzugsweise an der der Oberseite zugewanden Seite der Grenzschicht, lokal Modifizierungen eingebracht werden, so dass an Stellen der lokalen Modifizierungen eine Auskopplung von in der Lichtleitstruktur geleitetem Licht aus der Lichtleitstruktur begünstigt wird, was zu einer Lichtemission durch die Oberseite des Dokumentenkörpers führt.

Erfindungsgemäß ist vorgesehen, dass zumindest ein Teil der Modifizierungen ausgebildet ist oder ausgebildet wird, indem angrenzend an die Lichtleitstruktur Lichtstreuzentren angeordnet sind bzw. angeordnet werden.

Ein Wert- und/oder Sicherheitsdokument mit einem solchen Sicherheitsmerkmal kann mit einem Verfahren verifiziert werden, welches die Schritte umfasst: Einkoppeln von Licht in die Lichtleitstruktur des Dokumentkörpers, ortsaufgelöstes Erfassen des in der Lichtleitstruktur geleiteten und aus einer Oberseite des Dokumentenkörpers austretenden Lichts und Vergleichen eines aus dem ortsaufgelöst erfassten austretenden Lichts abgeleiteten Lichtaustrittsmusters mit einem erwarteten Muster. Dies bedeutet, dass eine Strukturierung der Modifizierungen der Grenzschicht des Lichtleiters, d.h. der Lichtleiterstruktur, ein charakteristisches Lichtaustrittsmuster festlegt.

Eine Vorrichtung zum Verifizieren des durch die Lichtleitstruktur gebildeten Sicherheitsmerkmals eines Wert- und/oder Sicherheitsdokuments umfasst eine Anregungsquelle zum Bewirken einer Einkopplung von Licht in die Lichtleitstruktur des Dokumentkörpers, eine Erfassungseinheit zum ortsaufgelösten Erfassen des in der Lichtleitstruktur geleiteten und aus einer Oberseite des Dokumentenkörpers austretenden Lichts und eine Vergleichseinheit zum Vergleichen eines aus dem ortsaufgelöst erfassten austretenden Lichts abgeleiteten Lichtaustrittsmusters mit einem erwarteten Muster.

Eine Vorrichtung zum Unterstützen der Verifikation eines Sicherheitsdokuments umfasst lediglich eine Anregungsquelle zum Einkoppeln des Lichts in die Lichtleitstruktur des Dokumentkörpers. Eine Erfassung eines Lichtaustrittsmusters erfolgt bei einer solchen Ausführungsform durch einen menschlichen Betrachter, der das beobachtete Lichtaustrittsmuster mit einem erwarteten Lichtaustrittsmuster zur Verifikation vergleicht.

Die Erfindung nutzt aus, dass die Lichtleitstruktur einen Brechungsindex aufweist, der von dem oder den Brechungsindizes des umgebenden Materials oder der umgebenden Materialien verschieden ist. Somit ist eine Lichtleitung über eine Totalreflexion an den Grenzschichten der Lichtleitstruktur möglich, wobei davon ausgegangen wird, dass die Grenzschicht glatt und stetig ist. Über die gezielt herbeigeführten lokalen Modifizierungen der Grenzschicht wird eine lokale Lichtauskopplung durch eine zumindest teilweise Unterdrückung der Totalreflexion bewirkt. Zusätzlich ist vorgesehen, die Modifizierungen so in dem Dokumentenkörper so vorzusehen, dass ein Austritt von Licht durch die Oberseite des Dokumentenkörpers bewirkt wird.

### Definitionen

Als Farbe oder Tinte wird im Sinne des hier Beschriebenen jede verdruckbare Zusammensetzung oder jedes druckbare Material angesehen. Diese bedeutet, dass jede Zusammensetzung oder jedes Material, die bzw. das drucktechnisch auf eine Substratschichtoberfläche aufgebracht werden, eine (Druck-)Farbe oder Tinte darstellen. Eine sich ergebende Farbschicht oder Tintenschicht stellt eine Druckschicht dar. Diese muss nicht unbedingt eine für den menschlichen Betrachter wahrnehmbare Farbe aufweisen. Eine transparente Druckschicht ist somit in diesem Sinne auch eine Farbschicht.

Eine Lichtleitstruktur ist eine Struktur, die in der Lage ist elektromagnetische Strahlung, vorzugsweise Licht im sichtbaren Wellenlängenbereich, aufgrund von Totalreflexion an Grenzflächen oder Grenzschichten der Lichtleitstruktur zu leiten.

Lumineszenzstoffe sind Materialien oder Stoffe, die bei einer Anregung eines atomaren oder molekularen angeregten Zustands unter Aussendung von elektromagnetischer Strahlung, vorzugsweise im sichtbaren Wellenlängenbereich in einen niederenergetischen Zustand übergehen. Auch komplexere elektronische Übergänge unter Aussendung von Photonen werden hier als Lumineszenzvorgänge betrachtet. Abhängig von den physikalischen und/der chemischen Prozessen werden unterschiedliche Lumineszenzprozesse unterschieden. Im Rahmen des hier beschriebenen werden Lumineszenzstoffe genutzt, die Photolumineszenz, insbesondere Fluoreszenz oder Phosphoreszenz oder auch Mehr-Photonen-Prozesse (z.B. so genannte upconversion Prozesse), sowie Elektrolumineszenz nutzen.

### Bevorzugte Ausführungsformen

Bei einer bevorzugten Ausführungsform umfasst die Lichtleitstruktur ein transparentes erstes Kunststoffmaterial, welches zumindest an einer der Oberseite zugewandten und einer der Oberseite gegenüberliegenden Unterseite des Dokumentenkörpers zugewandten Seite von Kunststoffmaterialien, vorzugsweise transparenten Kunststoffmaterialien, umgeben ist, welche einen geringeren Brechungsindex als das erste Kunststoffmaterial aufweisen.

Bevorzugt umfasst das Bereitstellen und/oder Herstellen des Dokumentenkörpers ein Laminieren mehrerer Substratschichten zu einem Laminat. Der Dokumentenkörper umfasst somit ein aus mehreren Substratschichten hergestelltes Laminat. Ein solches Wert- und/oder Sicherheitsdokument erhält man mit einem Verfahren zum Herstellen eines Wert- und/oder Sicherheitsdokuments, welches die Schritte umfasst: Bereitstellen von Substratschichten; Zusammentragen der Substratschichten zu einem Substratschichtenstapel, in dem die Substratschichten einander flächig überlappen; Laminieren der Substratschichten unter Anwendung von Wärme und Druck zu einem Dokumentkörper.

Zum einen ist es möglich, dass die Lichtleitstruktur eine auf eine der Substratschichten aufgedruckte Druckstruktur ist. Bei einer solchen Ausführungsform wird auf eine der Substratschichten vor dem Laminieren die Lichtleitstruktur in Form einer Druckstruktur aufgedruckt. Das drucktechnische Aufbringen der Lichtleitstruktur bzw. der Druckstruktur, die die Lichtleitstruktur bildet, kann mittels beliebiger Druckverfahren, beispielsweise Hochdruck, Flachdruck, Durchdruck, Tiefdruck oder besonders bevorzugt mittels eines Digitaldrucks, beispielsweise mittels eines Tintenstrahldrucks, ausgeführt werden.

Als Tinte oder Farbe werden Zubereitungen verwendet, die eine Druckschicht bzw. Druckstruktur mit einer hohen Brechkraft, d.h. einem großen Brechungsindex, erzeugen.

Bei einer bevorzugten Ausführungsform wird die Lichtleitstruktur mit einer Tinte oder Farbe gedruckt, die Teilchen eines Materials mit einem Brechungsindex umfassen, der Größer als der Brechungsindex der an die Lichtleitstruktur angrenzenden Materialen ist, wobei die Teilchen im Mittel einen Durchmesser aufweisen, der kleiner als die halbe Wellenlänge einer für die Lichtleitung vorgesehenen Strahlung, bevorzugt kleiner als ein Fünftel dieser Wellenlänge und noch bevorzugter kleiner als ein Zehntel dieser Wellenlänge ist. Als Teilchen eignen sich insbesondere Metallchalcogenide, zum Beispiel Metalloxide, vorzugsweise Titandioxid, Zirkondioxid, Metallsulfide, zum Beispiel Zinksulfid, aber auch Diamant, insbesondere in nanoskaliger Form. Denkbar sind auch amorphe Materialformen, insbesondere hochbrechende (Blei-)Gläser.

Alternativ zu einer drucktechnischen Erstellung mittels einer Druckstruktur, die zusätzlich die Möglichkeit einer einfachen flächigen Strukturierung der Lichtleitstruktur in der Ebene parallel zur Oberseite des Dokumentenkörpers ermöglicht, ist bei anderen Ausführungsformen vorgesehen, dass die Lichtleitstruktur mittels einer transparenten Folie bzw. Substratschicht aus dem ersten Kunststoffmaterial gebildet wird, welches zwischen zwei, vorzugsweise ebenfalls transparente, Folien bzw. Substratschichten angeordnet wird oder ist, die aus Kunststoffmaterialien hergestellt sind, die einen geringeren Brechungsindex als das erste Kunststoffmaterial aufweisen. Die zwei an die die Lichtleitstruktur bildende Folie angrenzenden Folien können aus demselben Kunststoffmaterial oder unterschiedlichen Kunststoffmaterialien hergestellt sein.

Die Modifizierungen sind bei einer Ausführungsform über ein Abtragen, insbesondere eine Laserablation, von Material des Dokumentkörpers an den Stellen der Modifizierungen hergestellt, wobei bei dem Abtragen das zwischen der Oberseite und der Lichtleitstruktur angeordnete Material des Dokumentenkörpers zumindest einmal vollständig entfernt wurde. Für eine Laserablation kann vorzugsweise gepulste Laserstrahlung eines CO₂-Lasers verwendet werden, oder auch eines gepulsten UV-Lasers (z. B. eines KrF - Excimerlasers bzw. Festkörperlasers mit Frequenzvervielfachung, beispielsweise eines frequenzvervierfachten Nd:YAG) oder auch eines Kurzpulslasers beliebiger Wellenlänge mit Pulsen im Piko- bis Femtosekundenbereich. Diese Laserstrahlung wird bevorzugt stark fokussiert, um gezielt eine Ablation und keine Schwärzungen in dem Dokumentenkörper zu erzeugen. Das Material des Dokumentenkörpers wird hierbei zwischen der Oberseite und der Lichtleitstruktur lokal abgetragen, um die Modifizierungen der Grenzschicht zu bewirken.

Alternativ zu einer Laserablation können beliebige andere Verfahren verwendet werden, mit denen das Material bis zu der Grenzschicht der Lichtleitstruktur abgetragen werden kann. Insbesondere eigenen sich auch Fräsen, Bohren oder Ätzen. Ein Vorteil des Ausbildens der Modifizierungen über ein Ausbilden von Aussparungen besteht darin, dass die Modifizierungen in ansonsten fertig gestellte Dokumentenkörper eingearbeitet werden können.

Bei einigen Ausführungsformen wird durch das Abtragen an den Stellen der Modifizierungen eine der Oberseite zugewandte Oberfläche der Lichtleitstruktur strukturiert. Dieses kann beispielsweise ein Aufrauen der Lichtleitstruktur an den Stellen umfassen, an denen durch den Materialabtrag Aussparungen in dem Dokumentenkörper gebildet sind. Die Rauigkeit der Oberfläche begünstigt eine Auskopplung von Licht lokal an den Stellen der Aussparungen. Dieser Effekt bleibt in der Regel auch erhalten, wenn die Aussparungen anschließend wieder mit Material verfüllt werden. Nur wenn die Aussparungen durch ein Material mit einem Brechungsindex aufgefüllt werden, der dem der Lichtleitstruktur entspricht, können die Rauigkeiten in Ausnahmefällen ausgeglichen werden.

Alternativ oder zusätzlich können die Modifizierungen angrenzend an die Lichtleitstruktur angeordnete Lichtstreuzentren umfassen. Dies bedeutet, dass auch in den Fällen, in denen ein Abtragen des äußeren Materials nicht zu einer Strukturierung der Oberfläche der Lichtleitstruktur geführt hat, beispielsweise angrenzend an die Lichtleitstruktur Lichtstreuzentren angeordnet werden können, um die Modifizierungen auszubilden.

Die Streuzentren werden oder sind vorzugsweise auf die Lichtleitstruktur oder eine an die Lichtleitstruktur angrenzende Substratschicht drucktechnisch aufgebracht. Wird der Dokumentenkörper mittels einer Lamination hergestellt, so erfolgt das Aufdrucken vor dem Laminieren.

Bei einer Weiterbildung der Erfindung umfassen die Lichtstreuzentren lumineszierende Stoffe. Werden als Lichtstreuzentren zumindest teilweise lumineszierende Stoffe verwendet, so werden diese durch das in der Lichtleitstruktur geleitete Licht angeregt. Dieses ist gleichbedeutend mit einem Auskoppeln von Licht, da die für die Anregung der lumineszierenden Stoffe genutzten Photonen in der Lichtleitstruktur nicht weiter geleitet werden und keiner Totalreflexion unterliegen. Vielmehr wird das Lumineszenzlicht der lumineszierenden Stoffe ungerichtet abgestrahlt, zum Teil somit auch, wie erwünscht, durch die Oberseite des Dokumentenkörpers. Lumineszierende Stoffe stellen Lichtstreuzentren zur Ausbildung der Modifizierungen dar, die in eine ansonsten "perfekte Grenzschicht" eingearbeitet sein können. Wird angrenzend an die Lichtleitstruktur beispielsweise eine Kunststoffschicht aufgedruckt, die einen geringeren Brechungsindex aufweist, so kann ein lokales Einbringen von Lumineszenzstoffen in diese Druckschicht eine Auskopplung von Licht bewirken, da das über Totalreflexion geleitete Licht in dem aufgedruckten Kunststoff ein abnehmendes, aber endliches Feld ausbildet, welches bei geeigneter Wahl der Lichtwellenlänge und der Lumineszenzstoffe für eine Anregung der Lumineszenz und somit der Lichtstreuung ausreicht.

Bei einer Ausführungsform der Erfindung wird oder ist in dem Dokumentenkörper eine Lichtquelle angeordnet, über die Licht in die Lichtleitstruktur einkoppelbar ist. Hierbei kann es sich beispielsweise um eine LED oder OLED handeln. Diese kann mit Kontakten versehen sein, die zu einer Oberfläche des Dokumentenkörpers geführt sind. Alternativ kann eine Leiterstruktur mit der Lichtquelle gekoppelt sein, über die mittels Induktion elektrische Energie in den Dokumentenkörper eingekoppelt werden kann. Ebenso sind Ausführungsformen vorgesehen, die eine Energiequelle in Form eines Energiespeichers umfassen. Dieser Energiespeicher, beispielsweise eine Monozelle, ist über einen beispielsweise induktiv schaltbaren Schalter mit der Lichtquelle verbunden. Ebenso ist es möglich, eine oder mehrere Photovoltaikzellen in den Dokumentenkörper für eine Energieversorgung zu integrieren.

Um einen unerwünschten Austritt von Licht , welches nicht korrekt in den Lichtleiter eingekoppelt wird, durch die Oberseite des Wert- oder Sicherheitsdokuments zu verhindern, ist bei einigen Ausführungsformen zwischen der Lichtleitstruktur und der Oberseite des Dokumentenkörpers eine opake Schicht, welche eine Druckschicht sein kann, angeordnet, die vorzugsweise nur an den Stellen der Modifizierungen unterbrochen ist, um den gewünschten Lichtaustritt aus der Oberseite bei einer Verifikation des Sicherheitsmerkmals zu ermöglichen.

Alternativ oder zusätzlich ist oder wird die Lichtleitstruktur an eine Seitenkante des Dokumentenkörpers geführt, um über die Seitenkante Licht für eine Lichtleitung in der Lichtleitstruktur in der Ebene parallel zur Oberseite einkoppeln zu können.

Um insbesondere Verschmutzungen zu vermeiden, die ein Austreten von Licht unterbinden könnten, werden die durch das Abtragen erzeugten Aussparungen in dem Dokumentenkörper bei bevorzugten Ausführungsformen durch Kunststoffmaterialen aufgefüllt, welche transparent und/oder transluzent sind und einen Brechungsindex aufweisen, der ähnlich oder höher als der des ersten Kunststoffmaterials ist, aus dem die Lichtleitstruktur hergestellt ist. Das Auffüllen kann mit einem beliebigen Verfahren ausgeführt werden. Vorzugsweise erfolgt dieses mittels Rakeln.

Über die Modifizierungen kann eine Information, insbesondere eine individualisierende und/oder personalisierende Information, in dem Dokumentenkörper auf einfache Weise gespeichert werden.

Eine individualisierende Information ist eine Information, die zwei ansonsten identische Gegenstände unterscheidbar macht. Eine individualisierende Information im Bereich von Wert- und/oder Sicherheitsdokumenten ist beispielsweise eine Seriennummer. Eine individualisierende Information, die eine einer Person zugeordnete Information kodiert, der das Sicherheitsdokument zugeordnet ist, wird als personalisierende Information bezeichnet. Als personalisierende Informationen seien lediglich beispielhaft genannt ein Name, ein Geburtsdatum, ein Vorname, ein Geburtsort, ein Wohnort, eine Körpergröße, eine Augenfarbe, biometrische Informationen wie beispielsweise ein Gesichtsbild und/oder ein Fingerabdruck oder Irismuster usw.

Eine weitere Vielfalt für die Speicherung von Information erhält man, indem man die Aussparungen durch Kunststoffmaterialien unterschiedlicher Farbe aufgefüllt.

Die Lichtleitstruktur ist bei einer bevorzugten Ausführungsform somit so strukturiert, dass sie über eine Anzahl der Koppelbereiche, eine Positionierung der Koppelbereiche, relative Abstände der Koppelbereiche zueinander und/oder deren jeweilige Ausdehnung entlang der einen oder den mehrerer Seitenflächen eine Information, vorzugsweise eine individualisierende oder personalisierende Information, in den Dokumentkörper kodiert ist oder wird. Um Lichtleitungsverluste an den Grenzflächen der Lichtleitstruktur zu minimieren, ist bei einer bevorzugten Ausführungsform vorgesehen, dass die Lichtleitstruktur von transparentem Material umgeben ist. Hierbei ist eine Materialstärke wünschenswert, die vorzugsweise etwa eine Wellenlänge, besonders bevorzugt ein Vielfaches der Wellenlänge des über die Lichtleitstruktur geleiteten Lichts trägt. Typischerweise sind somit für sichtbares Licht Materialstärken von einigen Mikrometern ausreichend.

Grundsätzlich sind als Werkstoffe für die Substratschichten oder Folien, aus denen ein Dokumentenkörper laminiert oder auf andere Weise ausgebildet wird, alle Polymerschichten einsetzbar, die im Bereich der Sicherheits- und/oder Wertdokumente üblicherweise verwendet werden. Die Polymerschichten können, gleich oder verschieden, auf Basis eines Polymerwerkstoffes aus der Gruppe, umfassend PC (Polycarbonat, insbesondere Bisphenol A Polycarbonat), PET (Polyethylenglykolterephthalat), PMMA (Polymethylmethacrylat), TPU (Thermoplastische Polyurethan Elastomere), PE (Polyethylen), PP (Polypropylen), PI (Polyimid oder Poly-trans-Isopren), PVC (Polyvinylchlorid) und Copolymeren solcher Polymere, gebildet sein. Bevorzugt ist der Einsatz von PC-Werkstoffen, wobei beispielsweise, aber keinesfalls notwendigerweise, auch so genannte Nieder-T_{g}-Werkstoffe einsetzbar sind, insbesondere für eine Polymerschicht auf welcher eine Druckschicht aufgebracht ist, und/oder für eine Polymerschicht, welche mit einer Polymerschicht, die eine Druckschicht trägt, verbunden ist, und zwar auf der Seite mit der Druckschicht. Nieder-T_{g}-Werkstoffe sind Polymere, deren Glastemperatur unterhalb von 140°C liegt.

Bevorzugt ist es dabei, wenn das Grundpolymer zumindest einer der zu verbindenden Polymerschichten gleiche oder verschiedene miteinander reaktive Gruppen enthält, wobei bei einer Laminiertemperatur von weniger als 200°C reaktive Gruppen einer ersten Polymerschicht miteinander und/oder mit reaktiven Gruppen einer zweiten Polymerschicht reagieren. Dadurch kann die Laminiertemperatur herabgesetzt werden, ohne dass dadurch der innige Verbund der laminierten Schichten gefährdet wird. Dies liegt im Falle verschiedener Polymerschichten mit reaktiven Gruppen daran, dass die verschiedenen Polymerschichten auf Grund der Reaktion der jeweiligen reaktiven Gruppen nicht mehr ohne weiteres delaminiert werden können. Denn es findet zwischen den Polymerschichten eine reaktive Kopplung statt, gleichsam ein reaktives Laminieren. Des Weiteren wird ermöglicht, dass wegen der niedrigeren Laminiertemperatur eine Veränderung einer farbigen Druckschicht, insbesondere eine Farbveränderung, verhindert wird. Vorteilhaft ist es dabei, wenn die Glastemperatur T_{g} der zumindest einen Polymerschicht vor der thermischen Laminierung weniger als 120°C (oder auch weniger als 110°C oder weniger als 100°C) beträgt, wobei die Glastemperatur dieser Polymerschicht nach der thermischen Laminierung durch Reaktion reaktiver Gruppen des Grundpolymers der Polymerschicht miteinander um zumindest 5°C, vorzugsweise zumindest 20°C, höher als die Glastemperatur vor der thermischen Laminierung ist. Hierbei erfolgt nicht nur eine reaktive Kopplung der miteinander zu laminierenden Schichten, vielmehr erfolgt eine Erhöhung des Molekulargewichts und somit der Glastemperatur durch Vernetzung des Polymers innerhalb der Schicht und zwischen den Schichten. Dies erschwert ein Delaminieren zusätzlich, insbesondere da bei einem Manipulationsversuch die hohen notwendigen Delaminationstemperaturen beispielsweise die Farben irreversibel beschädigt und das Dokument dadurch zerstört wird. Vorzugsweise beträgt die Laminiertemperatur beim Einsatz solcher Polymerwerkstoffe weniger als 180°C, besser noch weniger als 150°C. Die Auswahl der geeigneten reaktiven Gruppen ist für einen Fachmann auf dem Gebiet der Polymerchemie ohne Probleme möglich. Beispielhafte reaktive Gruppen sind ausgewählt aus der Gruppe, umfassend - CN, -OCN, -NCO, -NC, -SH, -Sₓ, -Tos, -SCN, -NCS, -H, Epoxy (-CHOCH₂), -NH₂, -NN⁺, - NN-R, -OH, -COOH, -CHO, -COOR, -Hal (-F, -Cl, -Br, -I), -Me-Hal (Me = zumindest zweiwertiges Metall, beispielsweise Mg), -Si(OR)₃, -SiHal₃, -CH=CH₂, und -COR", wobei R" eine beliebige reaktive oder nicht-reaktive Gruppe sein kann, beispielsweise -H, -Hal, C₁-C₂₀-Alkyl, C₃-C₂₀-Aryl, C₄-C₂₀-ArAlkyl, jeweils verzweigt oder linear, gesättigt oder ungesättigt, optional substituiert, oder korrespondierende Heterocyclen mit einem oder mehreren gleichen oder verschiedenen Heteroatomen N, O, oder S. Andere reaktive Gruppen sind selbstverständlich möglich. Hierzu gehören die Reaktionspartner der Diels-Alder Reaktion oder einer Metathese. Die reaktiven Gruppen können direkt an dem Grundpolymer gebunden oder über eine Spacergruppe mit dem Grundpolymer verbunden sein. Als Spacergruppen kommen alle dem Fachmann für Polymerchemie bekannten Spacergruppen in Frage. Dabei können die Spacergruppen auch Oligomere oder Polymere sein, welche Elastizität vermitteln, wodurch eine Bruchgefahr des Sicherheits- und/oder Wertdokuments reduziert wird. Solche elastizitätsvermitteInde Spacergruppen sind dem Fachmann bekannt und brauchen daher hier nicht weiter beschrieben zu werden. Lediglich beispielhaft seien Spacergruppen genannt, welche ausgewählt sind aus der Gruppe, umfassend -(CH₂)ₙ-, -(CH₂-CH₂-O)ₙ-, -(SiR₂-O)ₙ-, -(C₆H₄)ₙ-, -(C₆H₁₀)ₙ-, C₁-Cₙ-Alkyl, -C₃-C₍ₙ₊₃₎-Aryl, -C₄-C₍ₙ₊₄₎-ArAlkyl, jeweils verzweigt oder linear, gesättigt oder ungesättigt, optional substituiert, oder korrespondierende Heterocyclen mit einem oder mehreren, gleichen oder verschiedenen Heteroatomen O, N, oder S, wobei n = 1 bis 20, vorzugsweise 1 bis 10. Bezüglich weiterer reaktiver Gruppen oder Möglichkeiten der Modifikation wird auf die Literaturstelle "Ullmann's Encyclopaedia of Industrial Chemistry", Wiley Verlag, elektronische Ausgabe 2008, verwiesen. Der Begriff des Grundpolymers bezeichnet im Rahmen der vorstehenden Ausführungen eine Polymerstruktur, welche keine unter den eingesetzten Laminierbedingungen reaktiven Gruppen trägt. Es kann sich dabei um Homopolymere oder Copolymere handeln. Es sind auch gegenüber den genannten Polymere modifizierte Polymere umfasst.

Um einen hohen Brechungsindex einer Tinte, Farbe oder Polymerschicht zu erreichen, werden dieser vorzugsweise 10% bis 90% bevorzugter 30% bis 70% bezogen auf das Volumen Teilchen eines Materials mit einem großen Brechungsindex beigegeben. Als Materialien eigenen sich beispielsweise Titandioxid oder Zirkondioxid und andere Metalloxide.

Für den Druck auf Polycarbonat-Verbundschichten sind grundsätzlich alle fachüblichen Tinten einsetzbar. Bevorzugt ist die Verwendung einer Zubereitung, enthaltend: A) 0,1 bis 20 Gew.-% eines Bindemittels mit einem Polycarbonatderivat , B) 30 bis 99,9 Gew.-% eines vorzugsweise organischen Lösungsmittels oder Lösungsmittelgemischs, C) 0 bis 10 Gew.-%, bezogen auf Trockenmasse, eines Farbmittels oder Farbmittelgemischs, D) 0 bis 10 Gew.-% eines funktionalen Materials oder einer Mischung funktionaler Materialien, E) 0 bis 30 Gew.-% Additive und/oder Hilfsstoffe, oder einer Mischung solcher Stoffe, wobei die Summe der Komponenten A) bis E) stets 100 Gew.-% ergibt, als Drucktinte. Solche Polycarbonatderivate sind hochkompatibel mit Polycarbonatwerkstoffen, insbesondere mit Polycarbonaten auf Basis Bisphenol A, wie beispielsweise Makrofol® Folien. Zudem ist das eingesetzte Polycarbonatderivat hochtemperaturstabil und zeigt keinerlei Verfärbungen bei laminationstypischen Temperaturen bis zu 200°C und mehr, wodurch auch der Einsatz der vorstehend beschriebenen Nieder-Tg-Werkstoffe nicht notwendig ist. Im Einzelnen kann das Polycarbonatderivat funktionelle Carbonatstruktureinheiten der Formel (I) enthalten, 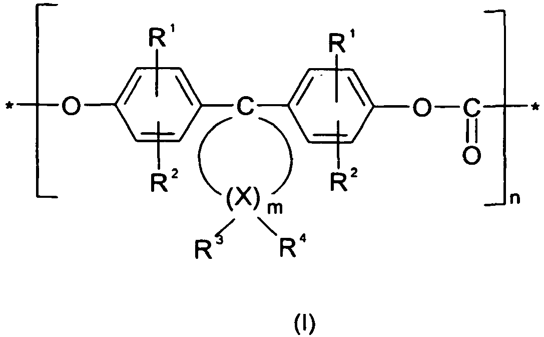 worin R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇C₁₂-Aralkyl, bevorzugt Phenyl-C₁-C₄-Alkyl, insbesondere Benzyl sind; m eine ganze Zahl von 4 bis 7, bevorzugt 4 oder 5 ist; R³ und R⁴ für jedes X individuell wählbar, unabhängig voneinander Wasserstoff oder C₁-C₆-Alkyl ist; X Kohlenstoff und n eine ganze Zahl größer 20 bedeuten, mit der Maßgabe, dass an mindestens einem Atom X, R³ und R⁴ gleichzeitig Alkyl bedeuten. Bevorzugt ist es, wenn an 1 bis 2 Atomen X, insbesondere nur an einem Atom X, R³ und R⁴ gleichzeitig Alkyl sind. R³ und R⁴ können insbesondere Methyl sein. Die X-Atome in alpha-Stellung zu dem Diphenyl-substituierten C-Atom (C1) können nicht dialkylsubstituiert sein. Die X-Atome in beta-Stellung zu C1 können mit Alkyl disubstituiert sein. Bevorzugt ist m = 4 oder 5. Das Polycarbonatderivat kann beispielsweise auf Basis von Monomeren, wie 4,4'-(3,3,5-trimethylcyclohexan-1,1-diyl)diphenol, 4,4'-(3,3-dimethylcyclohexan-1,1-diyl)diphenol, oder 4,4'-(2,4,4-trimethylcyclopentan-1,1-diyl)diphenol gebildet sein. Ein solches Polycarbonatderivat kann beispielsweise gemäß der Literaturstelle DE 38 32 396 A1 aus Diphenolen der Formel (Ia) hergestellt werden, deren Offenbarungsgehalt hiermit vollumfänglich in den Offenbarungsgehalt dieser Beschreibung aufgenommen wird. Es können sowohl ein Diphenol der Formel (Ia) unter Bildung von Homopolycarbonaten als auch mehrere Diphenole der Formel (Ia) unter Bildung von Copolycarbonaten verwendet werden (Bedeutung von Resten, Gruppen und Parametern, wie in Formel I).

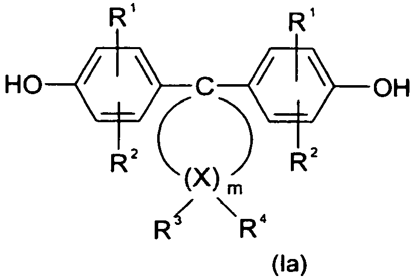

Außerdem können die Diphenole der Formel (Ia) auch im Gemisch mit anderen Diphenolen, beispielsweise mit denen der Formel (Ib)

HO - Z - OH (Ib),

zur Herstellung von hochmolekularen, thermoplastischen, aromatischen Polycarbonatderivaten verwendet werden.

Geeignete andere Diphenole der Formel (Ib) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (Ia) oder Heteroatome als Brückenglieder enthalten kann. Beispiele der Diphenole der Formel (Ib) sind Hydrochinon, Resorcin, Dihydroxydiphenyle, Bi-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha, alpha'-Bis-(hydroxyphenyl)-diisopropylbenzole sowie deren kernalkylierte und kernhalogenierte Verbindungen. Diese und weitere geeignete Diphenole sind beispielsweise in US 3 028 365 A, 2 999 835 A, 3 148 172 A, 3 275 601 A, 2 991 273 A, 3 271 367 A, 3 062 781 A, 2 970 131 A und US 2 999 846 A, in DE 1 570 703 A, 2 063 050 A, 2 063 052 A, 2 211 956 A, FR 1 561 518 A und in H. Schnell in: Chemistry and Physics of Polycarbonates, Interscience Publishers, New York 1964, beschrieben, welche hiermit vollumfänglich in den Offenbarungsgehalt der vorliegenden Anmeldung aufgenommen werden. Bevorzugte andere Diphenole sind beispielsweise: 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, alpha, alpha-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, alpha, alpha-Bis-(3,5-dimethyl-4-hydroxyphenyl)-p-diisopropylbenzol, 2,2-Bis-(3,5-dichlor-4-hydroxyphenyl)-propan und 2,2-Bis-(3,5-dibrom-4-hydroxyphenyl)-propan. Besonders bevorzugte Diphenole der Formel (Ib) sind beispielsweise 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan. Insbesondere ist 2,2-Bis-(4-hydroxyphenyl)-propan bevorzugt. Die anderen Diphenole können sowohl einzeln als auch im Gemisch eingesetzt werden. Das molare Verhältnis von Diphenolen der Formel (Ia) zu den gegebenenfalls mit zu verwendenden anderen Diphenolen der Formel (Ib), soll zwischen 100 Mol-% (Ia) zu 0 Mol-% (Ib) und 2 Mol-% (Ia) zu 98 Mol-% (Ib), vorzugsweise zwischen 100 Mol-% (Ia) zu 0 Mol-% (Ib) und 10 Mol-% (Ia) zu 90 Mol-% (Ib) und insbesondere zwischen 100 Mol-% (Ia) zu 0 Mol-% (Ib) und 30 Mol-% (Ia) zu 70 Mol-% (Ib) liegen. Die hochmolekularen Polycarbonatderivate aus den Diphenolen der Formel (Ia), gegebenenfalls in Kombination mit anderen Diphenolen, können nach den bekannten Polycarbonat-Herstellungsverfahren hergestellt werden. Dabei können die verschiedenen Diphenole sowohl statistisch als auch blockweise miteinander verknüpft sein. Die eingesetzten Polycarbonatderivate können in an sich bekannter Weise verzweigt sein. Wenn die Verzweigung gewünscht wird, kann diese in bekannter Weise durch Einkondensieren geringer Mengen, vorzugsweise Mengen von 0,05 bis 2,0 Mol-% (bezogen auf eingesetzte Diphenole), an drei- oder mehr als dreifunktionellen Verbindungen, insbesondere solchen mit drei oder mehr als drei phenolischen Hydroxylgruppen, erreicht werden. Einige Verzweiger mit drei oder mehr als drei phenolischen Hydroxylgruppen sind Phloroglucin, 4,6-Dimethyl-2,4,6-tri-(4-hydroxyphenyl)-hepten-2,4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5-methyl-benzyl)-4-methylphenol, 2-(4-hydroxyphenyl)-2-(2,4-dihydroxyphenyl)-propan, Hexa-[4-(4-hydroxyphenyl-isopropyl)-phenyl]-orthoterephthalsäureester, Tetra-(4-hydroxyphenyl)-methan, Tetra-[4-(4-hydroxyphenyl-isopropyl)phenoxy]-methan und 1,4-Bis-[4',4"-dihydroxytriphenyl)-methyl]-benzol. Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol. Als Kettenabbrecher zur an sich bekannten Regelung des Molekulargewichts der Polycarbonatderivate dienen monofunktionelle Verbindungen in üblichen Konzentraten. Geeignete Verbindungen sind z.B. Phenol, tert.-Butylphenole oder andere Alkyl-substituierte Phenole. Zur Regelung des Molekulargewichts sind insbesondere kleine Mengen Phenole der Formel (Ic) geeignet 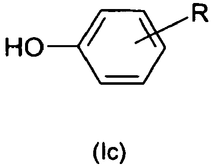 worin R einen verzweigten C₈- und/oder C₉-Alkylrest darstellt. Bevorzugt ist im Alkylrest R der Anteil an CH₃-Protonen zwischen 47 und 89 % und der Anteil der CH- und CH₂-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt. Die Polycarbonatderivate können vorzugsweise nach dem Phasengrenzflächenverhalten (vgl. H.Schnell in. Chemistry and Physics of Polycarbonates, Polymer Reviews, Vol. IX, Seite 33ff., Interscience Publ. 1964) in an sich bekannter Weise hergestellt werden. Hierbei werden die Diphenole der Formel (Ia) in wässrig alkalischer Phase gelöst. Zur Herstellung von Copolycarbonaten mit anderen Diphenolen werden Gemische von Diphenolen der Formel (Ia) und den anderen Diphenolen, beispielsweise denen der Formel (Ib), eingesetzt. Zur Regulierung des Molekulargewichts können Kettenabbrecher z.B. der Formel (Ic) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt im Bereich von 0°C bis 40°C. Die gegebenenfalls mit verwendeten Verzweiger (bevorzugt 0,05 bis 2,0 Mol-%) können entweder mit den Diphenolen in der wässrig alkalischen Phase vorgelegt werden oder in dem organischen Lösungsmittel gelöst vor Phosgenierung zugegeben werden. Neben den Diphenolen der Formel (Ia) und gegebenenfalls anderen Diphenolen (Ib) können auch deren Mono- und/oder Bis-chlorkohlensäureester mit verwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (Ia) und gegebenenfalls Formel (Ib); bei Mitverwendung von Chlorkohlensäureestern kann die Phosgenmenge in bekannter Weise entsprechend reduziert werden. Geeignete organische Lösungsmittel für die Kettenabbrecher sowie gegebenenfalls für die Verzweiger und die Chlorlcohlensäureester sind beispielsweise Methylenchlorid, Chlorbenzol sowie insbesondere Mischungen aus Methylenchlorid und Chlorbenzol. Gegebenenfalls können die verwendeten Kettenabbrecher und Verzweiger im gleichen Solvens gelöst werden. Als organische Phase für die Phasengrenzflächenpolykondensation dienen beispielsweise Methylenchlorid, Chlorbenzol sowie Mischungen aus Methylenchlorid und Chlorbenzol. Als wässrige alkalische Phase dient beispielsweise NaOH-Lösung. Die Herstellung der Polycarbonatderivate nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen, eingesetzt werden. Die Katalysatoren können vor Beginn der Phosgenierung oder während oder auch nach der Phosgenierung zugesetzt werden. Die Polycarbonatderivate können nach dem bekannten Verfahren in homogener Phase, dem sogenannten "Pyridinverfahren" sowie nach dem bekannten Schmelzeumesterungsverfahren unter Verwendung von beispielsweise Diphenylcarbonat anstelle von Phosgen hergestellt werden. Die Polycarbonatderivate können linear oder verzweigt sein, sie sind Homopolycarbonate oder Copolycarbonate auf Basis der Diphenole der Formel (Ia). Durch die beliebige Komposition mit anderen Diphenolen, insbesondere mit denen der Formel (Ib) lassen sich die Polycarbonateigenschaften in günstiger Weise variieren. In solchen Copolycarbonaten sind die Diphenole der Formel (Ia) in Mengen von 100 Mol-% bis 2 Mol-%, vorzugsweise in Mengen von 100 Mol-% bis 10 Mol-% und insbesondere in Mengen von 100 Mol-% bis 30 Mol-%, bezogen auf die Gesamtmenge von 100 Mol-% an Diphenoleinheiten, in Polycarbonatderivaten enthalten. Das Polycarbonatderivat kann ein Copolymer sein, enthaltend, insbesondere hieraus bestehend, Monomereinheiten M1 auf Basis der Formel (Ib), vorzugsweise Bisphenol A, sowie Monomereinheiten M2 auf Basis des geminal disubstituierten Dihydroxydiphenylcycloalkans, vorzugsweise des 4,4'-(3,3,5-trimethylcyclohexan-1,1-diyl)diphenols, wobei das Molverhältnis M2/M1 vorzugsweise größer als 0,3, insbesondere größer als 0,4, beispielsweise größer als 0,5 ist. Bevorzugt ist es, wenn das Polycarbonatderivat ein mittleres Molekulargewicht (Gewichtsmittel) von mindestens 10.000, vorzugsweise von 20.000 bis 300.000, aufweist. Die Komponente B kann grundsätzlich im Wesentlichen organisch oder wässrig sein. Im Wesentlichen wässrig bedeutet dabei, dass bis zu 20 Gew.-% der Komponente B) organische Lösungsmittel sein können. Im Wesentlichen organisch bedeutet, dass bis zu 5 Gew.-% Wasser in der Komponente B) vorliegen können. Vorzugsweise enthält die Komponente B einen bzw. besteht aus einem flüssigen aliphatischen, cycloaliphatischen und/oder aromatischen Kohlenwasserstoff, einem flüssigen organischen Ester und/oder einer Mischung solcher Substanzen. Die eingesetzten organischen Lösungsmittel sind vorzugsweise halogenfreie organische Lösungsmittel. In Frage kommen insbesondere aliphatische, cycloaliphatische, aromatische Kohlenwasserstoffe, wie Mesitylen, 1,2,4-Trimethylbenzol, Cumol und Solvent Naptha, Toluol, Xylol; (organische) Ester, wie Methylacetat, Ethylacetat, Butylacetat, Methoxypropylacetat, Ethyl-3-ethoxypropionat. Bevorzugt sind Mesitylen, 1,2,4-Trimethylbenzol, Cumol und Solvent Naptha, Toluol, Xylol, Essigsäuremethylester, Essigsäureethylester, Methoxypropylacetat. Ethyl-3-ethoxypropionat. Ganz besonders bevorzugt sind Mesitylen (1,3,5-Trimethylbenzol), 1,2,4-Trimethylbenzol, Cumol (2-Phenylpropan), Solvent Naptha und Ethyl-3-ethoxypropionat. Ein geeignetes Lösungsmittelgemisch umfasst beispielsweise L1) 0 bis 10 Gew.-%, vorzugsweise 1 bis 5 Gew.-%, insbesondere 2 bis 3 Gew.-%, Mesitylen, L2) 10 bis 50 Gew.-%, vorzugsweise 25 bis 50 Gew.-%, insbesondere 30 bis 40 Gew.-%, 1-Methoxy-2-propanolacetat, L3) 0 bis 20 Gew.-%, vorzugsweise 1 bis 20 Gew.-%, insbesondere 7 bis 15 Gew.-%, 1,2,4-Trimethylbenzol, L4) 10 bis 50 Gew.-%, vorzugsweise 25 bis 50 Gew.-%, insbesondere 30 bis 40 Gew.-%, Ethyl-3-ethoxypropionat, L5) 0 bis 10 Gew.-%, vorzugsweise 0,01 bis 2 Gew.-%, insbesondere 0,05 bis 0,5 Gew.-%, Cumol, und L6) 0 bis 80 Gew.-%, vorzugsweise 1 bis 40 Gew.-%, insbesondere 15 bis 25 Gew.-%, Solvent Naphtha, wobei die Summe der Komponenten L1 bis L6 stets 100 Gew.-% ergibt. Die Zubereitung kann im Detail enthalten: A) 0,1 bis 10 Gew.-%, insbesondere 0,5 bis 5 Gew.-%, eines Bindemittels mit einem Polycarbonatderivat auf Basis eines geminal disubstituierten Dihydroxydiphenylcycloalkans, B) 40 bis 99,9 Gew.-%, insbesondere 45 bis 99,5 Gew.-%, eines organischen Lösungsmittels oder Lösungsmittelgemischs, C) 0,1 bis 6 Gew.-%, insbesondere 0,5 bis 4 Gew.-%, eines Farbmittels oder Farbmittelgemischs, D) 0,001 bis 6 Gew.-%, insbesondere 0,1 bis 4 Gew.-%, eines funktionales Materials oder einer Mischung funktionaler Materialien, E) 0,1 bis 30 Gew.-%, insbesondere 1 bis 20 Gew.-%, Additive und/oder Hilfsstoffe, oder eine Mischung solcher Stoffe. Als Komponente C, sofern ein Farbmittel vorgesehen sein soll, kommt grundsätzlich jedes beliebige Farbmittel oder Farbmittelgemisch in Frage. Unter Farbmittel sind alle farbgebenden Stoffe bezeichnet. Das bedeutet, es kann sich sowohl um Farbstoffe (einen Überblick über Farbstoffe gibt Ullmann's Encyclopedia of Industrial Chemistry, Electronic Release 2007, Wiley Verlag, Kapitel "Dyes, General Survey") wie auch um Pigmente (einen Überblick über organische wie anorganische Pigmente gibt Ullmann's Encyclopedia of Industrial Chemistry, Electronic Release 2007, Wiley Verlag, Kapitel "Pigments, Organic" bzw. "Pigments, Inorganic") handeln. Farbstoffe sollten in den Lösungsmitteln der Komponente B löslich bzw. (stabil) dispergierbar oder suspendierbar sein. Des Weiteren ist es vorteilhaft, wenn das Farbmittel bei Temperaturen von 160°C und mehr für einen Zeitraum von mehr als 5 min. stabil, insbesondere farbstabil ist. Es ist auch möglich, dass das Farbmittel einer vorgegebenen und reproduzierbaren Farbveränderung unter den Verarbeitungsbedingungen unterworfen ist und entsprechend ausgewählt wird. Pigmente müssen neben der Temperaturstabilität insbesondere in feinster Partikelgrößenverteilung vorliegen. Für einen Tintenstrahldruck bedeutet dies in der Praxis, dass die Teilchengröße nicht über 1,0 µm hinausgehen sollte, da sonst Verstopfungen im Druckkopf die Folge sind. In der Regel haben sich nanoskalige Festkörperpigmente und gelöste Farbstoffe bewährt. Die Farbmittel können kationisch, anionisch oder auch neutral sein. Lediglich als Beispiele für im Tintenstrahldruck verwendbare Farbmittel seinen genannt: Brillantschwarz C.I. Nr. 28440, Chromogenschwarz C.I. Nr. 14645, Direkttiefschwarz E C.I. Nr. 30235, Echtschwarzsalz B C.I. Nr. 37245, Echtschwarzsalz K C.I. Nr. 37190, Sudanschwarz HB C.I. 26150, Naphtolschwarz C.I. Nr. 20470, Bayscript® Schwarz flüssig, C.I. Basic Black 11, C.I. Basic Blue 154, Cartasol® Türkis K-ZL flüssig, Cartasol® Türkis K-RL flüssig (C.I. Basic Blue 140), Cartasol Blau K5R flüssig. Geeignet sind des Weiteren z.B. die im Handel erhältlichen Farbstoffe Hostafine® Schwarz TS flüssig (vertrieben von Clariant GmbH Deutschland), Bayscript® Schwarz flüssig (C.I.-Gemisch, vertrieben von Bayer AG Deutschland), Cartasol® Schwarz MG flüssig (C.I. Basic Black 11, Eingetragenes Markenzeichen der Clariant GmbH Deutschland), Flexonylschwarz® PR 100 (E C.I. Nr. 30235, vertrieben von Hoechst AG), Rhodamin B, Cartasol® Orange K3 GL, Cartasol® Gelb K4 GL, Cartasol® K GL, oder Cartasol® Rot K-3B. Des Weiteren können als lösliche Farbmittel Anthrachinon-, Azo-, Chinophthalon-, Cumarin-, Methin-, Perinon-, und/oder Pyrazolfarbstoffe, z.B. unter dem Markennamen Macrolex® erhältlich, Verwendung finden. Weitere geeignete Farbmittel sind in der Literaturstelle Ullmann's Encyclopedia of Industrial Chemistry, Electronic Release 2008, Wiley Verlag, Kapitel "Colorants Used in Ink Jet Inks" beschrieben. Gut lösliche Farbmittel führen zu einer optimalen Integration in die Matrix bzw. das Bindemittel der Druckschicht. Die Farbmittel können entweder direkt als Farbstoff bzw. Pigment zugesetzt werden oder als Paste, einem Gemisch aus Farbstoff und Pigment zusammen mit einem weiteren Bindemittel. Dieses zusätzliche Bindemittel sollte chemisch kompatibel mit den weiteren Komponenten der Zubereitung sein. Sofern eine solche Paste als Farbmittel eingesetzt wird, bezieht sich die Mengenangabe der Komponente B auf das Farbmittel ohne die sonstigen Komponenten der Paste. Diese sonstigen Komponenten der Paste sind dann unter die Komponente E zu subsumieren. Bei Verwendung von so genannten Buntpigmenten in den Skalenfarben Cyan-Magenta-Yellow und bevorzugt auch (Ruß)-Schwarz sind Volltonfarbabbildungen möglich. Die Komponente D umfasst Substanzen, die unter Einsatz von technischen Hilfsmitteln unmittelbar durch das menschliche Auge oder durch Verwendung von geeigneten Detektoren ersichtlich sind. Hier sind die dem Fachmann einschlägig bekannten Materialien (vgl. auch van Renesse in: Optical document security, 3rd Ed., Artech House, 2005) gemeint, die zur Absicherung von Wert und Sicherheitsdokumenten eingesetzt werden. Dazu zählen Lumineszenzstoffe (Farbstoffe oder Pigmente, organisch oder anorganisch) wie z.B. Photoluminophore, Elektroluminophore, Antistokes Luminophore, Fluorophore aber auch magnetisierbare, photoakustisch adressierbare oder piezoelektrische Materialien. Des Weiteren können Raman-aktive oder Ramanverstärkende Materialien eingesetzt werden, ebenso wie so genannte Barcode-Materialien. Auch hier gelten als bevorzugte Kriterien entweder die Löslichkeit in der Komponente B oder bei pigmentierten Systemen Teilchengrößen < 1 µm sowie eine Temperaturstabilität für Temperaturen > 160°C im Sinne der Ausführungen zur Komponente C. Funktionale Materialien können direkt zugegeben werden oder über eine Paste, d.h. einem Gemisch mit einem weiteren Bindemittel, welches dann Bestandteil der Komponente E bildet, oder dem eingesetzten Bindemittel der Komponente A. Die Komponente E umfasst bei Tinten für einen Tintenstrahldruck üblicherweise eingerichtete Stoffe wie Antischaummittel, Stellmittel, Netzmittel, Tenside, Fließmittel, Trockner, Katalysatoren, (Licht-) Stabilisatoren, Konservierungsmittel, Biozide, Tenside, organische Polymere zur Viskositätseinstellung, Puffersysteme, etc. Als Stellmittel kommen fachübliche Stellsalze in Frage. Ein Beispiel hierfür ist Natriumlactat. Als Biozide kommen alle handelsüblichen Konservierungsmittel, welche für Tinten verwendet werden, in Frage. Beispiele hierfür sind Proxel®GXL und Parmetol® A26. Als Tenside kommen alle handelsüblichen Tenside, welche für Tinten verwendet werden, in Frage. Bevorzugt sind amphotere oder nichtionische Tenside. Selbstverständlich ist aber auch der Einsatz spezieller anionischer oder kationischer Tenside, welche die Eigenschaften des Farbstoffs nicht verändern, möglich. Beispiele für geeignete Tenside sind Betaine, ethoxilierte Diole usw. Beispiele sind die Produktreihen Surfynol® und Tergitol®. Die Menge an Tensiden wird insbesondere bei Anwendung für den Tintenstrahldruck beispielsweise mit der Maßgabe gewählt, dass die Oberflächenspannung der Tinte im Bereich von 10 bis 60 mN/m, vorzugsweise 20 bis 45 mN/m, gemessen bei 25°C, liegt. Es kann ein Puffersystem eingerichtet sein, welches den pH-Wert im Bereich von 2,5 bis 8,5, insbesondere im Bereich von 5 bis 8, stabilisiert. Geeignete Puffersysteme sind Lithiumacetat, Boratpuffer, Triethanolamin oder Essigsäure/Natriumacetat. Ein Puffersystem wird insbesondere im Falle einer im Wesentlichen wässrigen Komponente B in Frage kommen. Zur Einstellung der Viskosität der Tinte können (ggf. wasserlösliche) Polymere vorgesehen sein. Hier kommen alle für übliche Tintenformulierungen geeigneten Polymere in Frage. Beispiele sind wasserlösliche Stärke, insbesondere mit einem mittleren Molekulargewicht von 3.000 bis 7.000, Polyvinylpyrrolidon, insbesondere mit einem mittleren Molekulargewicht von 25.000 bis 250.000, Polyvinylalkohol, insbesondere mit einem mittleren Molekulargewicht von 10.000 bis 20.000, XanthanGummi, Carboxy-Methylcellulose, Ethylenoxid/Propylenoxid-Blockcopolymer, insbesondere mit einem mittleren Molekulargewicht von 1.000 bis 8.000. Ein Beispiel für das letztgenannte Blockcopolymer ist die Produktreihe Pluronic®. Der Anteil an Biozid, bezogen auf die Gesamtmenge an Tinte, kann im Bereich von 0 bis 0,5 Gew-%, vorzugsweise 0,1 bis 0,3 Gew.-%, liegen. Der Anteil an Tensid, bezogen auf die Gesamtmenge an Tinte, kann im Bereich von 0 bis 0,2 Gew.-% liegen. Der Anteil an Stellmitteln kann, bezogen auf die Gesamtmenge an Tinte, 0 bis 1 Gew.-%, vorzugsweise 0,1 bis 0,5 Gew.-%, betragen. Zu den Hilfsmitteln werden auch sonstige Komponenten gezählt, wie beispielsweise Essigsäure, Ameisensäure oder n-Methyl-Pyrolidon oder sonstige Polymere aus der eingesetzten Farbstofflösung oder -Paste. Bezüglich Substanzen, welche als Komponente E geeignet sind, wird ergänzend beispielsweise auf Ullmann's Encyclopedia of Chemical Industry, Electronic Release 2008, Wiley Verlag, Kapitel "Paints and Coatings", Sektion "Paint Additives", verwiesen. Ferner werden die Materialien, die einen Brechungsindex der Tinte erhöhen zu den Additiven und Hilfsmitteln der Komponente E zugeordnet. Für ein Ausbilden der Lichtleitstruktur werden Tinten bevorzugt, die keine Pigmente größer als 250 nm als Farbmittel enthalten, da diese als Streuzentren eine Lichtleitung negativ beeinflussen.

Die Merkmale des erfindungsgemäßen Herstellungsverfahrens, des Verfahrens zum Verifizieren sowie der Vorrichtung oder Assistenzvorrichtung zum Verifizieren weisen dieselben Vorteile wie die entsprechenden Merkmale des erfindungsgemäßen Wert- oder Sicherheitsdokuments auf.

Nachfolgend wird die Erfindung anhand bevorzugter Ausführungsbeispiele unter Bezugnahme auf eine Zeichnung näher erläutert. Hierbei zeigen:
- Fig. 1: eine schematische Schnittdarstellung durch einen Dokumentenkörper mit einer Lichtleitstruktur;
- Fig. 2: eine schematische Schnittdarstellung durch den Dokumentenkörper nach Fig. 1, in den Aussparungen zum Ausbilden von Modifizierungen an einer Grenzschicht der Lichtleitstruktur eingebracht sind;
- Fig. 3: eine schematische Darstellung eines Dokumentenkörpers nach Fig. 2 zur Erläuterung der Lichtauskopplung an den vorgenommenen Modifizierungen der Grenzschicht der Lichtleitstruktur;
- Fig. 4: eine schematische Darstellung des Dokumentenkörpers nach Fig. 2 und 3 mit einer Assistenzvorrichtung zum Unterstützen der Verifikation des über die Lichtleitstruktur realisierten Sicherheitsmerkmals;
- Fig. 5: eine schematische Schnittdarstellung durch ein Sicherheitsdokument mit einer Lichtleitstruktur, wobei in den Dokumentenkörper eine Lichtquelle integriert ist;
- Fig. 6: eine schematische Darstellung des Dokumentenkörpers nach Fig. 5, in den Aussparungen zum Ausbilden von Modifizierungen der Grenzschicht der Lichtleitstruktur eingebracht sind;
- Fig. 7: eine schematische Darstellung des Dokumentenkörpers nach Fig. 6 zur Erläuterung der Lichtein- und -auskopplung;
- Fig. 8: eine schematische Darstellung eines Substratschichtenstapels;
- Fig. 9: eine schematische Darstellung eines Dokumentenkörpers, der als Laminat aus dem Schichtenstapel nach Fig. 8 hergestellt ist; und
- Fig. 10: eine schematische Darstellung zur Erläuterung der Lichtleitein- und -auskopplung in dem Dokumentenkörper nach Fig. 9.

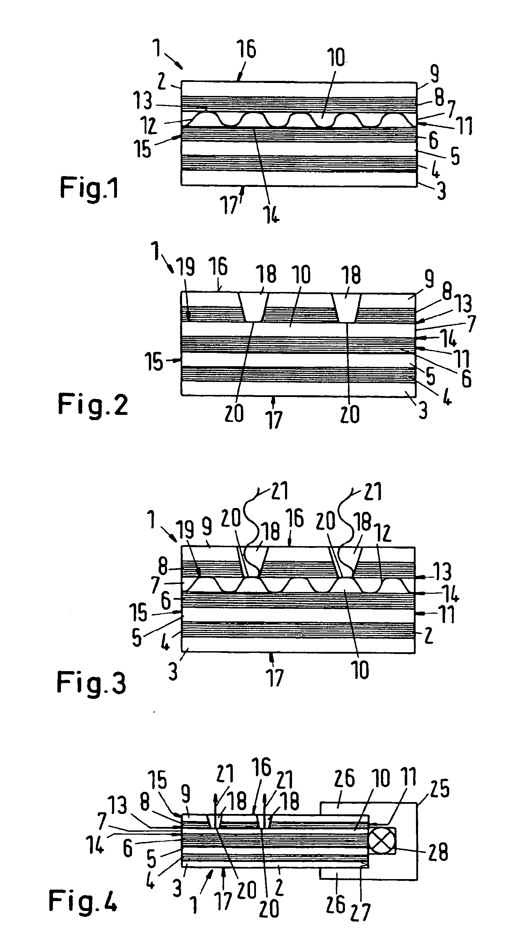

In Fig. 1 ist schematisch eine Schnittansicht durch ein Wert- oder Sicherheitsdokument 1 dargestellt, welches einen Dokumentenkörper 2 umfasst. Der Dokumentenkörper 2 ist in der dargestellten Ausführungsform ein Laminat. Das Laminat ist aus Substratschichten 3-9, welches thermoplastische Polymerschichten sind, zu einem Verbundkörper laminiert. Eine oberste Substratschicht 9 und eine unterste Substratschicht 3 sind transparent ausgeführt und dienen als Schutzschichten und werden auch als so genannte Overlay-Schichten bezeichnet. Im Innern des Dokumentenkörpers 2 sind opake Substratschichten 4, 6, 8 angeordnet, die beispielsweise bedruckt sein können. Zwischen den opaken Substratschichten 4, 6, 8 sind transparente Substratschichten 5, 7 angeordnet. Zumindest die zwischen den opaken Substratschichten 6, 8 angeordnete transparente Substratschicht 7 weist in der dargestellten Ausführungsform ein höheren Brechungsindex für Licht im sichtbaren Wellenlängenbereich auf als die beiden angrenzenden opaken Substratschichten 6, 8. Somit bildet die transparente Substratschicht 7 eine Lichtleitstruktur 10. Analog kann auch die Substratschicht 5 eine Lichtleitstruktur sein. Im Folgenden wird ohne eine Beschränkung andeuten zu wollen nur noch auf die Lichtleitstruktur 10 eingegangen. Das für diese Lichtleitstruktur ausgeführte gilt analog für die Substratschicht 5. An einer Seitenkante 11 des Dokumentenkörpers 2 eingekoppeltes Licht 12, welches mittels einer Sinuskurve angedeutet ist, wird über Totalreflexionen an einer oberen Grenzschicht 13 der Lichtleitstruktur 10 und einer unteren Grenzschicht 14 der Lichtleitstruktur 10 zu einer der Seitenkante 11 gegenüberliegenden Seitenkante 15 geleitet. Die obere Grenzschicht 13 zwischen der Lichtleitstruktur 10 und der opaken Substratschicht 8 ist einer Oberseite 16 des Dokumentenkörpers 2 zugewandt. Entsprechend ist die untere Grenzschicht 14 einer Unterseite 17 des Dokumentenkörpers 2 zugewandt.

Hierbei und im Folgenden wird vernachlässigt, dass sich zwischen der Lichtleitstruktur und einer opaken Schicht im Allgemeinen eine transparente Zwischenschicht befindet, welche wenigstens eine Schichtstärke oder Schichtdicke der halben Wellenlänge aufweist. Diese Zwischenschicht kann drucktechnisch auf die Lichtleitstruktur aufgebracht oder als Substratschicht eingebracht sein.

Um eine Auskopplung des eingekoppelten Lichts 12, welches in der Lichtleitstruktur 10 in einer Ebene, die im Wesentlichen parallel zu der Oberseite 16 des Dokumentenkörpers 2 verläuft, geleitet wird, aus der Oberseite 16 des Dokumentenkörpers zu bewirken, werden die zwischen der Lichtleitstruktur 10 und der Oberseite 16 des Dokumentenkörpers 2 angeordneten Substratschichten 8, 9 lokal abgetragen. Dies ist in Fig. 2 schematisch dargestellt. Gleiche technische Merkmale sind in allen Figuren mit identischen Bezugszeichen versehen.

Das Abtragen des Materials der Substratschichten 8, 9 erfolgt vorzugsweise mittels einer Laserablation. Hierzu wird beispielsweise Laserlicht eines CO₂-Lasers mit hoher Pulsenergie und starker Fokussierung verwendet. Das Material der Substratschichten 8, 9 wird hierbei vollständig abgetragen, so dass sich Aussparungen 18 ergeben. Durch das Abtragen des Materials der Substratschichten 8, 9 zum Bilden der Aussparungen 18 wird bei einigen Ausführungsformen eine Oberfläche 19 der Lichtleitstruktur 10 lokal im Bereich der Aussparungen 18 strukturiert, beispielsweise aufgeraut. Die Oberfläche 19, welche Bestandteil der oberen Grenzschicht 13 ist, wird somit im Bereich der Aussparungen modifiziert. Dies ist gleichbedeutend mit einer Modifizierung der oberen Grenzschicht 13. Die Grenzschicht 13 weist somit Modifizierungen 20 im Bereich der Aussparungen 18 auf.

Wie in Fig. 3 gezeigt ist, ist eine Totalreflexion des über die Seitenkante 11 eingekoppelten Lichts 12 im Bereich der Modifizierungen 20 gestört. Im Bereich der Modifizierungen 20 ist eine Auskopplung von Licht aus der Lichtleitstruktur 10 begünstigt. Dies bedeutet, dass ein Teil des Lichts 12 ausgekoppelt wird und durch die Oberseite 16 aus dem Dokumentenkörper 2 des Sicherheitsdokuments 1 als beobachtbares Licht 21 austritt. Für einen Betrachter wird somit ein durch die Modifizierungen 20 gebildetes Muster in Form von Lichtaustrittspositionen sichtbar. Über eine Anordnung der Modifizierungen 20, d.h. ein ausgebildetes Muster der Modifizierungen 20, können somit Informationen in dem Wert- oder Sicherheitsdokument 1 gespeichert werden, die mit Hilfe eines einfachen Hilfsmittels, welches eine Einkopplung des Lichts 12 in einer Ebene parallel zu der Oberseite 16 des Dokumentenkörpers 2 des Sicherheitsdokuments 1 ermöglicht, verifiziert werden kann.

In Fig. 4 ist eine Assistenzvorrichtung 25 gezeigt, die eine Weiterbildung eines aus dem Stand der Technik bekannten Kartenlesers sein kann, der beispielsweise ausgebildet ist, in den Dokumentenkörper 2 integrierte Chips usw. auslesen zu können. Ein solcher Chip ist aus Gründen der Vereinfachung in den hier dargestellten Ausführungsformen nicht gezeigt. Es versteht sich jedoch für den Fachmann, dass ein solcher Chip sehr wohl in einen erfindungsgemäßen Dokumentenkörper eines Wert- oder Sicherheitsdokuments integriert sein kann. Ebenso ist es selbstverständlich, dass das Wert- oder Sicherheitsdokument eine Vielzahl weiterer Sicherheitselemente und/oder Sicherheitsmerkmale umfassen kann, die dem Fachmann wohl bekannt sind. Die Assistenzvorrichtung 25 umfasst Führungselemente 26, die eine optimale Positionierung des Dokumentenkörpers 2 in der Assistenzvorrichtung 25 ermöglichen. Der Dokumentenkörper 2 wird vorzugsweise zwischen die Führungselemente 26 eingeführt und in die Assistenzvorrichtung 25 bewegt, bis die Seitenkante 11 an einen Anschlag 27 der Assistenzvorrichtung 25 anstößt. In der Assistenzvorrichtung 25 ist eine Lichtquelle 28 ausgebildet, die beispielsweise über einen Schalter (nicht dargestellt) von einer Person während einer Verifikation manuell aktiviert werden kann. Das Licht der Lichtquelle 28 wird dann in die Lichtleitstruktur 10 eingekoppelt, wie dies im Zusammenhang mit Fig. 1 und 3 beschrieben ist. An den Orten der Modifikationen 20 der Grenzschicht 13 der Lichtleitstruktur 10 wird ein Teil des eingekoppelten Lichts 12 ausgekoppelt und tritt durch die Oberseite 16 des Dokumentenkörpers 2 als beobachtbares Licht 21 aus dem Wert- oder Sicherheitsdokument 1 aus.

Um eine Ansammlung von Schmutz in den Aussparungen 18 beim Gebrauch des Wert- oder Sicherheitsdokuments 2 zu vermeiden, wird es bevorzugt, die Aussparungen 18 mit einem transparenten Kunststoffmaterial aufzufüllen. Dem Fachmann sind hierzu Verfahren bekannt. Beispielsweise wird ein Kunststoffmaterial, welches vorzugsweise einen Brechungsindex ähnlich zu dem Brechungsindex der Lichtleitstruktur 10 bzw. des Materials der Lichtleitstruktur 10 aufweist, verwendet. Ein Brechungsindex kann durch eine Beifügung von kleinen Metalloxidpartikeln in weiten Bereichen eingestellt werden. Als Verfahren zum Auffüllen der Aussparungen 18 bieten sich beispielsweise Druckverfahren oder ein Rakeln an.

Bei einigen Ausführungsformen ist vorgesehen, dass die Kunststoffmaterialien, die zum Auffüllen der Aussparungen 18 verwendet werden, unterschiedlich eingefärbt werden. Hierbei werden Farbmittel verwendet, deren Teilchengröße vorzugsweise kleiner 250 nm sind. Über die unterschiedliche Einfärbung ist es möglich, weitere Informationen zusätzlich zu der Information, welche durch die lokale Anordnung der Modifikationen 20 festgelegt ist, in dem Wert- oder Sicherheitsdokument zu speichern.

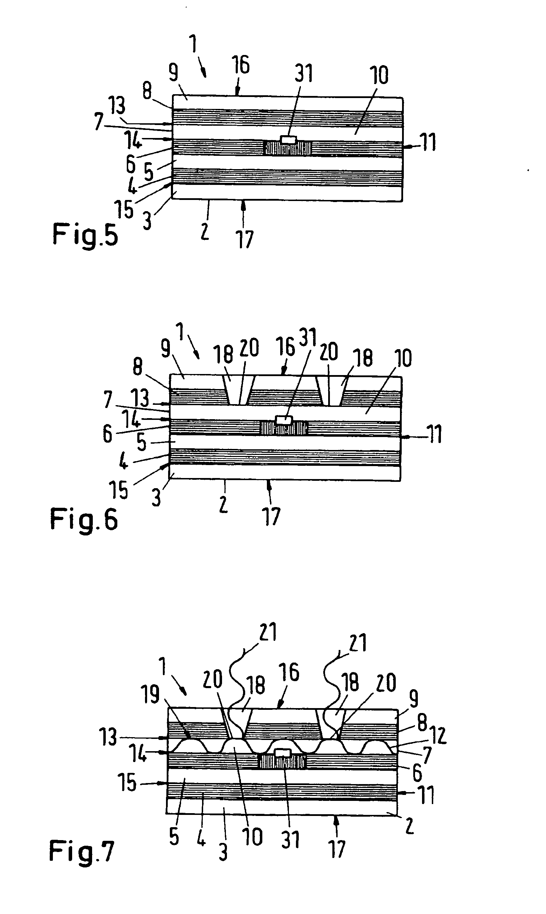

In Fig. 5 ist eine weitere Ausführungsform eines Wert- oder Sicherheitsdokuments 1 dargestellt, deren Aufbau dem des Wert- oder Sicherheitsdokuments 1 nach Fig. 1 bis 4 ähnelt. Das Wert- oder Sicherheitsdokument 1 nach Fig. 5 unterscheidet sich jedoch dadurch, dass in den Dokumentenkörper 2 eine Lichtquelle 31 integriert ist. Hierbei kann es sich beispielsweise um eine Leuchtdiode (LED) oder eine organische Leuchtdiode (OLED) handeln. Um die Lichtquelle 31 betreiben zu können, kann diese mit Kontaktstellen (nicht dargestellt) an einer Außenfläche des Dokumentkörpers verbunden sein. Hierüber ist es möglich, elektrische Energie zum Aktivieren der Lichtquelle 31 einzukoppeln. Alternativ kann die Lichtquelle mit einer Leiterstruktur verbunden sein, die beispielsweise mittels eines leitfähigen Kunststoffs aufgedruckt ist, um induktiv Energie in den Kartenkörper einzubringen und die Lichtquelle 31 hierüber zu aktivieren. Wieder andere Ausführungsformen sehen vor, dass zusätzlich ein Energiespeicher, beispielsweise eine Monozelle, in den Dokumentenkörper integriert ist (nicht dargestellt), die über einen beispielsweise magnetisch betätigbaren Schalter mit der Lichtquelle verbunden werden kann. Eine Vielzahl weiterer Schalter, die nach anderen Mechanismen geöffnet und/oder geschlossen werden, können ebenfalls verwendet werden. Wieder andere Ausführungsformen sehen vor, dass in den Dokumentenkörper eine Photovoltaikzelle integriert ist, so dass die Lichtquelle über ein Bestrahlen der Photovoltaikzelle mit elektromagnetischer Strahlung aktiviert werden kann.

Wie bei der Ausführungsform nach den Fig. 1 bis 3 werden in die Ausführungsform nach Fig. 5 Aussparungen eingebracht, um Modifizierungen 20 in der Grenzschicht 13 der Lichtleitstruktur 10 zu bewirken, wie dies in Fig. 6 dargestellt ist.

In Fig. 7 ist die Verifikation schematisch dargestellt. Das von der Lichtquelle 31 in die Lichtleitstruktur 10 eingekoppelte Licht 12 wird im Bereich der Modifizierungen 20, die sich an den Stellen der Aussparungen 18 befinden, ausgekoppelt und tritt als beobachtbares Licht 21 durch die Oberseite 16 des Dokumentenkörpers 10 des Wert- oder Sicherheitsdokuments 1 aus.

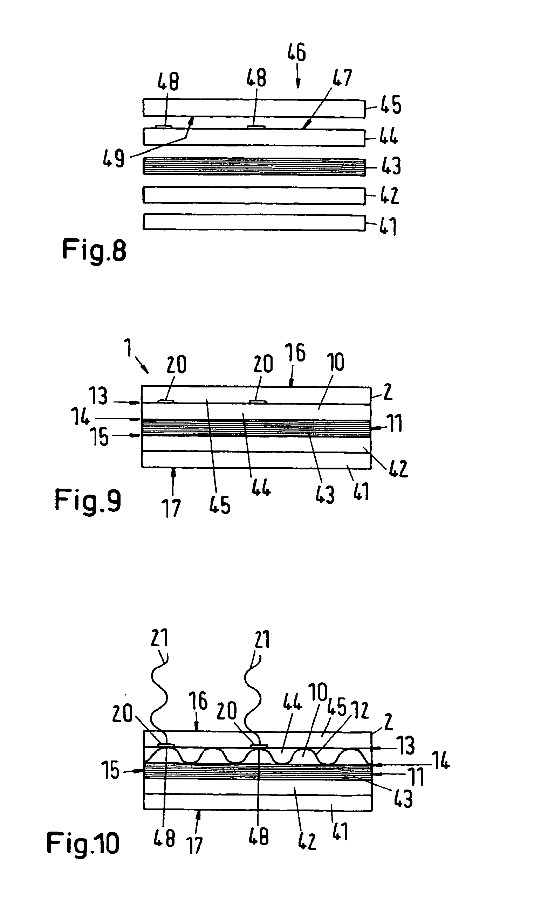

In den Fig. 8 bis 10 ist eine weitere Ausführungsform bzw. die Herstellung einer weiteren Ausführungsform eines Dokumentenkörpers 10 schematisch dargestellt. Wie in Fig. 8 dargestellt ist, werden mehrere Substratschichten 41-45 in einem Substratschichtenstapel 46 zusammengetragen. Eine mittlere Substratschicht 43 wird hierbei als opak angenommen. Die darüber angeordnete Substratschicht 44 weist einen Brechungsindex für sichtbares Licht auf, der größer als der Brechungsindex der mittleren Substratschicht 43 und der obersten Substratschicht 45 ist. Diese Substratschicht 44 bildet in dem zu erstellenden Dokumentenkörper 2 die Lichtleitstruktur 10 (vgl. Fig. 9). Vor dem Laminieren sind auf eine Oberseite 47 der die Lichtleitstruktur 10 bildenden Substratschicht 44 Lichtstreuzentren 48 aufgedruckt. Dieses können größere Farbpartikel oder auch lumineszierende Partikel sein. Diese können vorzugsweise drucktechnisch auf die Substratschicht 44 aufgedruckt sein. Über einen Eintrag von Wärme unter Anwendung von Druck werden die Substratschichten 41-45 zu einem Verbundkörper, einem Laminat, der den Dokumentenkörper 2 bildet, zusammengefügt. Bestehen die einzelnen Substratschichten 41-45 aus demselben Basispolymer, so kann in dem Laminationsschritt ein monolithischer Dokumentenkörper 2 hergestellt werden.

Die Grenzschicht 13 zwischen den Substratschichten 44 und 45, an der eine Totalreflexion während des Leitens von Licht in der Lichtleitstruktur 10 stattfindet, ist an jenen Stellen modifiziert und weist somit Modifikationen 20 auf, an denen die Lichtstreuzentren 48 auf die Substratschicht 44 aufgedruckt sind. An diesen Stellen wird somit eine Auskopplung des Lichts 12 begünstigt, wie in Fig. 10 dargestellt ist, so dass durch die transparente oberste Substratschicht 45 beobachtbares Licht 21 austritt. Für einen Betrachter ist somit das durch die Bedruckung mit den Lichtstreuzentren gebildete Muster als Muster von Lichtaustrittsstellen bei einer Verifikation zu beobachten.

Es versteht sich für den Fachmann, dass alternativ zu dem Bedrucken der Oberseite 47 der Substratschicht 44 auch eine Unterseite 49 der obersten Substratschicht 45 mit den Streuzentren 48 bedruckt werden könnte, um die Modifikationen 20 in dem nach der Lamination fertiggestellten Dokumentenkörper 2 zu erzeugen.

Die beschriebenen Ausführungsformen der Wert- oder Sicherheitsdokumente stellen lediglich stark vereinfachte beispielhafte Ausführungsformen dar. Selbstverständlich können die unterschiedlichen beschriebenen Möglichkeiten, die Grenzschicht der Lichtleitstruktur zu modifizieren, miteinander kombiniert werden. Beispielsweise können in die Aussparungen Streuzentren angrenzend an die Lichtleitstruktur eingebracht werden. Besonders vorteilhaft ist es, lumineszierende Lichtstreuzentren in die Aussparungen einzubringen, da hierdurch ein Auskoppeln des Lichts besonders begünstigt wird. Ferner ist über die Verwendung von lumineszierenden Lichtstreuzentren die Möglichkeit gegeben, eine Farbe des ausgekoppelten Lichts zu beeinflussen.

Bei den beschriebenen Ausführungsformen ist die Lichtleitstruktur jeweils angrenzend an opake Substratschichten dargestellt. Bei besonders bevorzugten Ausführungsformen ist jedoch vorgesehen, dass in den an die Lichtleitstruktur angrenzenden Materialen keine Lichtstreuzentren vorhanden sind. So wird es bei einigen Ausführungsformen bevorzugt, dass die einen geringeren Brechungsindex aufweisenden, an die die Lichtleitstruktur bildende Substratschicht angrenzenden Substratschichten ebenfalls transparent ausgebildet sind. Alternativ kann die die Lichtleitstruktur ausbildende Substratschicht auf beiden Seiten oder einer Seite mit einem transparenten Polymer mit geringerem Brechungsindex bedruckt sein.

Es versteht sich, dass Ausführungsformen vorteilhaft sind, die mehrere Lichtleitstrukturen umfassen. Eine zweite Lichtleitstruktur kann Modifizierungen aufweisen, die zu einer Auskopplung von Licht durch die Unterseite des Dokumentenkörpers führen.

Die beschriebenen Ausführungsformen weisen jeweils an der der Oberseite des Dokumentenkörpers zugewandten Grenzschicht Modifikationen auf. Andere Ausführungsformen können vorsehen, dass alternativ oder zusätzlich Modifizierungen an der der Oberseite abgewandten Grenzschicht vorgenommen sind, die auch zu einer Auskopplung von Licht aus der Lichtleitstruktur und einem beobachtbaren Lichtaustritt durch die Oberseite des Dokumentenkörpers des Wert- oder Sicherheitsdokuments führen.

### Bezugszeichenliste

- 1: Sicherheitsdokument
- 2: Dokumentenkörper
- 3: unterste Substratschicht (transparent)
- 4: Substratschicht (opak)
- 5: Substratschicht (transparent)
- 6: Substratschicht (opak)
- 7: Substratschicht (transparent)
- 8: Substratschicht (opak)
- 9: oberste Substratschicht (transparent)
- 10: Lichtleitstruktur
- 11: Seitenkante
- 12: eingekoppeltes Licht
- 13: obere Grenzschicht
- 14: untere Grenzschicht
- 15: gegenüberliegende Seitenkante
- 16: Oberseite (des Dokumentenkörpers)
- 17: Unterseite (des Dokumentenkörpers)
- 18: Aussparungen
- 19: Oberfläche der Lichtleitstruktur
- 20: Modifizierungen
- 21: beobachtbares Licht
- 25: Assistenzvorrichtung
- 26: Führungselemente
- 27: Anschlag
- 28: Lichtquelle
- 31: Lichtquelle
- 41 - 45: Substratschichten
- 46: Substratschichtenstapel
- 47: Oberseite (der Substratschicht 44)
- 48: Lichtstreuzentren
- 49: Unterseite (der Substratschicht 45)

## Patentansprüche

1. Wert- oder Sicherheitsdokument (1) umfassend einen Dokumentenkörper (2) mit einer Oberseite (16), wobei in dem Dokumentenkörper (2) eine Lichtleitstruktur (10) zum Leiten von Licht in einer Ebene, die im Wesentlichen parallel zu der Oberseite (16) verläuft, über Totalreflexionen an Grenzschichten (13, 14) der Lichtleitstruktur (10) ausgebildet ist, wobei die Grenzschichten (13, 14) lokale Modifizierungen (20) aufweisen, so dass an Stellen der lokalen Modifizierungen (20) eine Auskopplung von in der Lichtstruktur (10) geleitetem Licht (12) aus der Lichtleitstruktur (10) begünstigt wird, was zu einer Lichtemission durch die Oberseite (16) des Dokumentenkörpers (2) führt, **dadurch gekennzeichnet, dass** zumindest ein Teil der Modifizierungen (20) ausgebildet ist, indem angrenzend an die Lichtleitstruktur (10) Lichtstreuzentren (48) angeordnet sind.

2. Wert- oder Sicherheitsdokument (1) nach Anspruch 1, **dadurch gekennzeichnet, dass** die Lichtstreuzentren (48) auf die Lichtleitstruktur (10) oder eine an die Lichtleitstruktur (10) angrenzende Substratschicht (45) drucktechnisch aufgebracht sind.

3. Wert- oder Sicherheitsdokument (1) nach einem der Ansprüche 1 oder 2, **dadurch gekennzeichnet, dass** die Lichtstreuzentren (48) lumineszierende Stoffe umfassen.

4. Wert- oder Sicherheitsdokument (1) nach einem der vorangehenden Ansprüche, **dadurch gekennzeichnet, dass** der mindestens eine Teil der Modifizierungen (20) und/oder ein weiterer Teil der Modifizierungen (20) über ein Abtragen, insbesondere eine Laserablation, von Material des Dokumentenkörpers (2) an den Stellen der Modifizierungen (20) hergestellt sind, wobei bei dem Abtragen das zwischen der Oberseite (16) und der Lichtleitstruktur (10) angeordnete Material des Dokumentenkörpers (2) zumindest einmal vollständig entfernt wurde.

5. Wert- oder Sicherheitsdokument (1) nach einem der vorangehenden Ansprüche, **dadurch gekennzeichnet, dass** durch das Abtragen an den Stellen des weiteren Teils der Modifizierungen (20) eine der Oberseite (16) zugewandte Oberfläche (19) der Lichtleitstruktur (10) strukturiert ist.

6. Wert- oder Sicherheitsdokument (1) nach einem der vorangehenden Ansprüche, **dadurch gekennzeichnet, dass** durch das Abtragen erzeugte Aussparungen (18) in dem Dokumentenkörper (2) durch Kunststoffmaterialen aufgefüllt sind, welche transparent und/oder transluzent sind und einen Brechungsindex aufweisen, der ähnlich oder höher als der des ersten Kunststoffmaterials ist, aus dem die Lichtleitstruktur (10) hergestellt ist.

7. Wert- oder Sicherheitsdokument (1) nach einem der vorangehenden Ansprüche, **dadurch gekennzeichnet, dass** die Aussparungen (18) durch Kunststoffmaterialien unterschiedlicher Farbe aufgefüllte sind.

8. Wert- oder Sicherheitsdokument (1) nach einem der vorangehenden Ansprüche, **dadurch gekennzeichnet, dass** die Lichtleitstruktur (10) an eine Seitenkante (11) des Dokumentenkörpers (2) geführt ist, um über die Seitenkante (11) Licht (12) in die Lichtleitstruktur (10) für eine Lichtleitung in der Lichtleitstruktur (10) in der Ebene parallel zur Oberseite (16) einkoppeln zu können.

9. Wert- oder Sicherheitsdokument (1) nach einem der vorangehenden Ansprüche, **dadurch gekennzeichnet, dass** die Lichtleitstruktur (10) ein transparentes erstes Kunststoffmaterial umfasst, welches zumindest an einer der Oberseite (16) zugewandten und einer der Oberseite (16) gegenüberliegenden Unterseite (17) des Dokumentenkörpers (2) zugewandten Seite von vorzugsweise transparenten Kunststoffmaterialien umgeben ist, welche einen geringeren Brechungsindex als das erste Kunststoffmaterial aufweisen.

10. Wert- oder Sicherheitsdokument (1) nach einem der vorangehenden Ansprüche, **dadurch gekennzeichnet, dass** in dem Dokumentenkörper (2) eine Lichtquelle (31) angeordnet ist, über die Licht (12) in die Lichtleitstruktur (10) einkoppelbar ist.

11. Verfahren zum Herstellen eines Wert- oder Sicherheitsdokuments (1), welches einen Dokumentenkörper (2) mit einer Oberseite (16) umfasst, wobei in dem Dokumentenkörper (2) eine Lichtleitstruktur (10) zum Leiten von Licht (12) in einer Ebene, die im Wesentlichen parallel zu der Oberseite (16) verläuft, über Totalreflexionen an Grenzschichten (13, 14) der Lichtleitstruktur (10) ausgebildet ist oder wird, umfassend die Schritte:
Bereitstellen und/oder Herstellen des Dokumentenkörpers (2) mit der Lichtleitstruktur (10), wobei in die Grenzschichten (13, 14) lokal Modifizierungen (20) eingebracht werden, so dass an Stellen der lokalen Modifizierungen (20) eine Auskopplung von in der Lichtleitstruktur geleitetem Licht (12) aus der Lichtleitstruktur begünstigt wird, was zu einer Lichtemission durch die Oberseite (16) des Dokumentenkörpers (2) führt, **dadurch gekennzeichnet, dass** zumindest einen Teil der Modifizierungen (20) ausgebildet wird, indem angrenzend an die Lichtleitstruktur (10) Lichtstreuzentren (48) angeordnet werden.

12. Verfahren nach Anspruch 11, **dadurch gekennzeichnet, dass** die Lichtstreuzentren (48) auf die Lichtleitstruktur (10) oder eine an die Lichtleitstruktur (10) angrenzende Substratschicht drucktechnisch aufgebracht werden.

13. Verfahren nach einem der Ansprüche 11 oder 12, **dadurch gekennzeichnet, dass** als Lichtstreuzentren (48) zumindest teilweise lumineszierende Stoffe verwendet werden.

14. Verfahren nach einem der Ansprüche 11 bis 13, **dadurch gekennzeichnet, dass** die Lichtleitstruktur (10) drucktechnisch hergestellt wird.

15. Verfahren nach einem der Ansprüche 11 bis 14, **dadurch gekennzeichnet, dass** das Bereitstellen und/oder Herstellen des Dokumentenkörpers (2) ein Laminieren mehrerer Substratschichten (3-9; 41-45) zu einem Laminat umfasst.

## Claims

1. Valuable or security document (1) comprising a document body (2) having a top side (16), wherein there is formed in the document body (2) a light-guiding structure (10) for guiding light in a plane running substantially parallel to the top side (16) by means of total reflections at boundary layers (13, 14) of the light-guiding structure (10), wherein the boundary layers (13, 14) have local modifications (20), such that a coupling-out of light (12) guided in the light structure (10) from the light-guiding structure (10) is promoted at locations of the local modifications (12), which leads to light emission through the top side (16) of the document body (2), **characterised in that** at least a part of the modifications (20) is formed by arranging light-scatter centres (48) adjacent to the light-guiding structure (10).

2. Valuable or security document (1) according to claim 1, **characterised in that** the light-scatter centres (48) are applied, by printing, to the light-guiding structure (10) or a substrate layer (45) adjacent to the light-guiding structure (10).

3. Valuable or security document (1) according to any one of the claims 1 or 2, **characterised in that** the light-scatter centres (48) comprise luminescent substances.

4. Valuable or security document (1) according to any one of the preceding claims, **characterised in that** the at least one part of the modifications (20) and/or a further part of the modifications (20) are produced by the removal, especially by means of laser ablation, of material of the document body (2) at the locations of the modifications (20), wherein, during removal, the material of the document body (2), said material arranged between the top side (16) and the light-guiding structure (10), was completely removed at least once.

5. Valuable or security document (1) according to any one of the preceding claims, **characterised in that**, by means of removal at the locations of the further part of the modifications (20), a surface (19) of the light-guiding structure (10), said surface facing the top side (16), is structured.

6. Valuable or security document (1) according to any one of the preceding claims, **characterised in that** recesses (18) in the document body (2) that are created by removal are filled by plastic materials which are transparent and/or translucent and have a refractive index similar to or higher than that of the first plastic material from which the light-guiding structure (10) is made.

7. Valuable or security document (1) according to any one of the preceding claims, **characterised in that** the recesses (18) are recesses filled by differently coloured plastic materials.

8. Valuable or security document (1) according to any one of the preceding claims, **characterised in that** the light-guiding structure (10) is guided to a side edge (11) of the document body (2) to be able to couple in light (12) via the side edge (11) into the light-guiding structure (10) for a light guide in the light-guiding structure (10) in the plane parallel to the top side (16).

9. Valuable or security document (1) according to any one of the preceding claims, **characterised in that** the light-guiding structure (10) comprises a transparent first plastic material which, at least on one side facing the top side (16) and one side facing the bottom side (17), of the document body (2), opposite the top side (16) is surrounded by preferably transparent plastic materials having a lower refractive index than the first plastic material.

10. Valuable or security document (1) according to any one of the preceding claims, **characterised in that** a light source (31) is arranged in the document body (2) by means of which the light (12) can be coupled into the light-guiding structure (10).

11. Method for producing a valuable or security document (1), said method comprising a document body (2) with a top side (16) wherein there is or will be formed in the document body (2) a light-guiding structure (10) for guiding light (12) in a plane running substantially parallel to the top side (16) by means of total reflections at boundary layers (13, 14) of the light-guiding structure, comprising the following steps:
provision and/or production of the document body (2) with the light-guiding structure (10), wherein modifications (20) are introduced locally into the boundary layers (13, 14), such that a coupling-out of light (12) guided in the light-guiding structure from the light-guiding structure is promoted at locations of the local modifications (20), leading to a light emission through the top side (16) of the document body (2), **characterised in that** at least a part of the modifications (20) is formed by arranging light-scatter centres (48) adjacent to the light-guiding structure (10).

12. Method according to claim 11, **characterised in that** the light-scatter centres (48) are applied, by printing, to the light-guiding structure (10) or a substrate layer adjacent to the light-guiding structure (10).

13. Method according to any one of claims 11 or 12, **characterised in that** at least partly luminescent substances are used as light-scatter centres (48).

14. Method according to any one of claims 11 to 13, **characterised in that** the light-guiding structure (10) is produced by printing.

15. Method according to any one of claims 11 to 14, **characterised in that** the provision or production of the document body (2) comprises the lamination of several substrate layers (3-9; 41-45) to create a laminate.

## Revendications

1. Document de valeur ou de sécurité (1) comprenant un corps de document (2) avec un côté supérieur (16), sachant qu'une structure de guidage de lumière (10) est réalisée dans le corps de document (2) pour le guidage de la lumière dans un plan qui s'étend sensiblement parallèlement au côté supérieur (16), par des réflexions totales sur des couches limites (13, 14) de la structure de guidage de lumière (10), sachant que les couches limites (13, 14) présentent des modifications locales (20) de sorte qu'un découplage entre la lumière (12) guidée dans la structure de guidage de lumière (10) et la structure de guidage de lumière (10) est favorisé aux endroits des modifications locales (20), ce qui entraîne une émission de lumière par le côté supérieur (16) du corps de document (2), **caractérisé en ce qu'**au moins une partie des modifications (20) est réalisée en disposant des centres de diffusion de lumière (48) de manière contiguë à la structure de guidage de lumière (10).

2. Document de valeur ou de sécurité (1) selon la revendication 1, **caractérisé en ce que** les centres de diffusion de lumière (48) sont appliqués par impression sur la structure de guidage de lumière (10) ou une couche de substrat (45) contiguë à la structure de guidage de lumière (10).

3. Document de valeur ou de sécurité (1) selon l'une quelconque des revendications 1 ou 2, **caractérisé en ce que** les centres de diffusion de lumière (48) comportent des substances luminescentes.

4. Document de valeur ou de sécurité (1) selon l'une quelconque des revendications précédentes, **caractérisé en ce qu'**au moins une partie des modifications (20) et/ou une autre partie des modifications (20) est fabriquée par un enlèvement, en particulier une ablation au laser de matériau du corps de document (2) aux endroits des modifications (20), sachant que lors de l'enlèvement, le matériau disposé entre le côté supérieur (16) et la structure de guidage de lumière (10) du corps de document (2) a été retiré au moins une fois complètement.

5. Document de valeur ou de sécurité (1) selon l'une quelconque des revendications précédentes, **caractérisé en ce qu'**une surface (19) tournée vers le côté supérieur (16) de la structure de guidage de lumière (10) est structurée par l'enlèvement aux endroits de l'autre partie des modifications (20).

6. Document de valeur ou de sécurité (1) selon l'une quelconque des revendications précédentes, **caractérisé en ce que** des évidements (18) générés par l'enlèvement sont remplis dans le corps de document (2) par des matériaux plastiques qui sont transparents et/ou translucides et présentent un indice de réfraction semblable ou supérieur à celui du premier matériau plastique, en lequel est fabriquée la structure de guidage de lumière (10).

7. Document de valeur ou de sécurité (1) selon l'une quelconque des revendications précédentes, **caractérisé en ce que** les évidements (18) sont remplis par des matériaux plastiques de différente couleur.

8. Document de valeur ou de sécurité (1) selon l'une quelconque des revendications précédentes, **caractérisé en ce que** la structure de guidage de lumière (10) est guidée sur une arête latérale (11) du corps de document (2) afin de pouvoir injecter par l'arête latérale (11) de la lumière (12) dans la structure de guidage de lumière (10) pour un guidage de lumière dans la structure de guidage de lumière (10) dans le plan parallèle au côté supérieur (16).

9. Document de valeur ou de sécurité (1) selon l'une quelconque des revendications précédentes, **caractérisé en ce que** la structure de guidage de lumière (10) comporte un premier matériau plastique transparent qui est entouré, au moins sur un côté tourné vers le côté supérieur (16) et tourné vers un côté inférieur (17) opposé au côté supérieur (16) du corps de document (2), par des matériaux plastiques de préférence transparents qui présentent un indice de réfraction moindre que le premier matériau plastique.

10. Document de valeur ou de sécurité (1) selon l'une quelconque des revendications précédentes, **caractérisé en ce qu'**une source lumineuse (31) est disposée dans le corps de document (2), par laquelle la lumière (12) peut être injectée dans la structure de guidage de lumière (10).

11. Procédé de fabrication d'un document de valeur ou de sécurité (1) qui comporte un corps de document (2) avec un côté supérieur (16), sachant qu'une structure de guidage de lumière (10) est réalisée dans le corps de document (2) pour le guidage de la lumière (12) dans un plan qui s'étend sensiblement parallèlement au côté supérieur (16), par des réflexions totales sur des couches limites (13, 14) de la structure de guidage de lumière (10), comprenant les étapes suivantes:
mettre à disposition et/ou fabriquer le corps de document (2) avec la structure de guidage de lumière (10), sachant que des modifications (20) sont introduites localement dans les couches limites (13, 14) de sorte qu'un découplage entre la lumière (12) guidée dans la structure de guidage de lumière et la structure de guidage de lumière est favorisé aux endroits des modifications locales (20), ce qui entraîne une émission de lumière par le côté supérieur (16) du corps de document (2), **caractérisé en ce qu'**au moins une partie des modifications (20) est réalisée en disposant des centres de diffusion de lumière (48) de manière contiguë à la structure de guidage de lumière (10).

12. Procédé selon la revendication 11, **caractérisé en ce que** les centres de diffusion de lumière (48) sont appliqués par impression sur la structure de guidage de lumière (10) ou une couche de substrat contiguë à la structure de guidage de lumière (10).

13. Procédé selon l'une quelconque des revendications 11 ou 12, **caractérisé en ce que** des substances au moins partiellement luminescentes sont utilisées comme centres de diffusion de lumière (48).

14. Procédé selon l'une quelconque des revendications 11 à 13, **caractérisé en ce que** la structure de guidage de lumière (10) est fabriquée par impression.

15. Procédé selon l'une quelconque des revendications 11 à 14, **caractérisé en ce que** la mise à disposition et/ou la fabrication du corps de document (2) comporte un laminage de plusieurs couches de substrat (3-9 ; 41-45) pour former un laminé.
